(19) Europäisches Patentamt
European Patent Office
Office européen des brevets

(11) **EP 3 145 241 A1**

(12) **EUROPEAN PATENT APPLICATION**
published in accordance with Art. 153(4) EPC

(43) Date of publication:
**22.03.2017 Bulletin 2017/12**

(51) Int Cl.:
***H04W 36/00*** (2009.01)  ***H04W 24/02*** (2009.01)

(21) Application number: **14896692.2**

(22) Date of filing: **03.06.2014**

(86) International application number:
**PCT/CN2014/079044**

(87) International publication number:
**WO 2016/000092 (07.01.2016 Gazette 2016/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co. Ltd.
Shenzhen, Guangdong 518129 (CN)**

(72) Inventors:
• **ZHANG, Yongping
Shenzhen
Guangdong 518129 (CN)**
• **LIU, Jinnan
Shenzhen
Guangdong 518129 (CN)**

(74) Representative: **Gill Jennings & Every LLP
The Broadgate Tower
20 Primrose Street
London EC2A 2ES (GB)**

(54) **COMMUNICATION METHOD IN HETEROGENEOUS NETWORK, MACRO BASE STATION, MICRO BASE STATION, AND USER EQUIPMENT**

(57) The present invention discloses a method for communication in a heterogeneous network, a macro base station, a micro base station, and user equipment. The macro base station includes: a processing unit, configured to determine location information of user equipment UE within coverage of the macro base station, and allocate a candidate micro base station to the UE according to the location information of the UE; and a sending unit, configured to send identifier information of the candidate micro base station to the UE, where the identifier information of the candidate micro base station is used by the UE to receive a reference signal sent by the candidate micro base station, where the sending unit is further configured to send the location information of the UE to the candidate micro base station, where the location information is used by the candidate micro base station to determine a first precoding matrix that is used when the candidate micro base station sends the reference signal to the UE. According to embodiments of the present invention, a channel state of a millimeter-wave band channel between a micro base station and UE can be measured.

FIG. 8

**Description**

**TECHNICAL FIELD**

Embodiments of the present invention relate to the communications field, and more specifically, to a method for communication in a heterogeneous network, a macro base station, a micro base station, and user equipment.

**BACKGROUND**

In a heterogeneous network into which a multi-carrier technology is introduced, a micro base station is deployed in a hot spot within coverage of a macro base station. The macro base station operates in a low frequency band, to provide wide coverage; the micro base station operates in a high frequency band, to provide a high-speed data service for a user. In this way, the micro base station deployed in the hot spot can effectively offload traffic from the macro base station, thereby improving overall network performance.

In recent years, a millimeter-wave communications technology is introduced into the heterogeneous network. Carrier frequency used in this technology is millimeter-wave frequency, which is far higher than carrier frequency (lower than 3 GHz) used in an existing cellular communications system. Therefore, operating bandwidth in a millimeter-wave communications system is far greater than operating bandwidth in the existing cellular communications system. In addition, in a propagation process, the millimeter-wave communications system has features of a large transmission loss, few paths, LOS (Line of Sight, line of sight) links as main links, and extremely large coherent bandwidth. For example, coherent bandwidth in a 60 GHz millimeter-wave communications system may reach 100 MHz.

To overcome a problem of excessive attenuation in a millimeter-wave signal in a transmission process, a common method at present is to use a beamforming technology, in which a micro base station transmits a beam that has extremely good directivity and an extremely high gain by using a large-diameter antenna array. Because the beam transmitted based on the large-diameter antenna array and the beamforming technology has extremely good directivity, a signal transmit end has an extremely high requirement on accuracy of channel state information. Currently, a macro base station completes positioning of UE (User Equipment, user equipment) by using a low frequency link, and in this way, a micro base station may transmit a signal based on location information of the UE. For example, the macro base station receives, by using the low frequency link, the location information reported by the UE; or cooperates with a group of base stations having a positioning function, to transmit a reference signal to the UE over the low frequency link, and completes positioning of the UE by means of triangulation. In this way, when transmitting a signal by using the beamforming technology, the micro base station aims a maximum transmission direction of a beam towards a location of the UE based on the location information of the UE.

However, based on the foregoing method, when an obstruction exists between the micro base station and the UE, because links on a millimeter-wave channel are mainly LOS links, there are no sufficient reflective and refractive links, and a millimeter-wave beam transmitted by the micro base station cannot reach the UE; therefore, millimeter-wave communication cannot be performed effectively.

**SUMMARY**

Embodiments of the present invention provide a method for communication in a heterogeneous network, a macro base station, a micro base station, and user equipment, so that a state of a millimeter-wave band channel between a micro base station and UE can be measured.

According to a first aspect, an embodiment of the present invention provides a macro base station, where the macro base station belongs to a heterogeneous network, the heterogeneous network further includes micro base stations, the micro base stations operate in a millimeter-wave band, and the macro base station includes: a processing unit, configured to determine location information of user equipment UE within coverage of the macro base station, and allocate a candidate micro base station to the UE according to the location information of the UE; and a sending unit, configured to send identifier information of the candidate micro base station to the UE, where the identifier information of the candidate micro base station is used by the UE to receive a reference signal sent by the candidate micro base station, where the sending unit is further configured to send the location information of the UE to the candidate micro base station, where the location information is used by the candidate micro base station to determine a first precoding matrix that is used when the candidate micro base station sends the reference signal to the UE.

With reference to the first aspect, in a first implementation manner of the first aspect, the processing unit is specifically configured to select, according to the location information of the UE and location information of the micro base stations in the heterogeneous network, at least one of micro base stations that effectively cover the UE as the candidate micro base station of the UE.

With reference to the first aspect and the foregoing implementation manner, in a second implementation manner of the first aspect, the macro base station further includes a receiving unit, where the receiving unit is configured to receive a measurement report from the UE, where the measurement report is determined by the UE according to the reference signal received from the candidate micro base station, the measurement report includes channel information, and the channel information is used to indicate a state of a millimeter-wave band channel between the candidate micro base station and the UE; and the processing unit is further configured to select, from the candidate micro base station according to the measurement report, a micro base station that provides an access service for the UE.

With reference to the first aspect and the foregoing implementation manners, in a third implementation manner of the first aspect, the measurement report further includes identifier information of a second precoding matrix; and the sending unit is further configured to send the identifier information of the second precoding matrix to the selected micro base station, to instruct the micro base station to precode, according to the second precoding matrix, a service signal sent to the UE.

With reference to the first aspect and the foregoing implementation manners, in a fourth implementation manner of the first aspect, the processing unit is specifically configured to select, from the candidate micro base station according to the measurement report, a candidate micro base station that meets a preset channel state condition, to provide an access service for the UE.

According to a second aspect, an embodiment of the present invention provides a micro base station, where the micro base station belongs to a heterogeneous network, the heterogeneous network further includes a macro base station, the micro base station operates in a millimeter-wave band, and the micro base station includes: a receiving unit, configured to receive location information of UE from the macro base station, where the location information is used by the candidate micro base station to send a reference signal to the UE; a processing unit, configured to determine, according to the location information, a first precoding matrix that is used when the micro base station sends the reference signal to the UE, and generate a precoded reference signal; and a sending unit, configured to send the precoded reference signal to the UE in a millimeter-wave band corresponding to the micro base station.

With reference to the second aspect, in a first implementation manner of the second aspect, the processing unit is specifically configured to determine, according to the location information of the UE, (2L+1) first precoding matrices that are used when the micro base station sends reference signals to the UE, and correspondingly generate (2L+1) precoded reference signals, where L is a nonnegative integer.

With reference to the second aspect and the foregoing implementation manner, in a second implementation manner of the second aspect, the sending unit is specifically configured to send, based on an SDMA technology, the (2L+1) precoded reference signals to the UE in the millimeter-wave band corresponding to the micro base station, where the (2L+1) precoded reference signals form (2L+1) beams whose center is a location of the UE and that cover a preset angle range.

With reference to the second aspect and the foregoing implementation manners, in a third implementation manner of the second aspect, the receiving unit is further configured to receive identifier information, sent by the macro base station, of a second precoding matrix; and the processing unit is further configured to precode, according to the second precoding matrix, a service signal that is sent to the UE by using the sending unit.

According to a third aspect, an embodiment of the present invention provides user equipment, including: a receiving unit, configured to receive identifier information of a candidate micro base station from a macro base station, where the identifier information of the candidate micro base station is used by the user equipment UE to receive a reference signal sent by the candidate micro base station, where the receiving unit is further configured to receive, according to the identifier information of the candidate micro base station, a precoded reference signal sent by the candidate micro base station, where a first precoding matrix used for precoding the reference signal is determined according to location information of the UE; a processing unit, configured to determine a measurement report according to the received reference signal, where the measurement report includes channel information, and the channel information is used to indicate a state of a millimeter-wave band channel between the candidate micro base station and the UE; and a sending unit, configured to send the measurement report to the macro base station.

With reference to the third aspect, in a first implementation manner of the third aspect, the measurement report further includes identifier information of a micro base station that meets a preset channel state condition.

With reference to the third aspect and the foregoing implementation manner, in a second implementation manner of the third aspect, the measurement report further includes identifier information of a second precoding matrix; and the receiving unit is further configured to receive a service signal sent by a micro base station that is selected by the macro base station according to the measurement report, where the service signal is a signal that is obtained after precoding is performed by using the second precoding matrix.

With reference to the third aspect and the foregoing implementation manners, in a third implementation manner of the third aspect, the sending unit is further configured to send the location information of the UE to the macro base station.

According to a fourth aspect, an embodiment of the present invention provides a method for communication in a heterogeneous network, where the heterogeneous network includes a macro base station and micro base stations, the micro base stations operate in a millimeter-wave band, and the method includes: determining, by the macro base station, location information of user equipment UE within coverage of the macro base station; allocating, by the macro base station, a candidate micro base station to the UE according to the location information of the UE, and sending identifier information of the candidate micro base station to the UE, where the identifier information of the candidate micro base station is used by the UE to receive a reference signal sent by the candidate micro base station; and sending, by the macro base station, the location information of the UE to the candidate micro base station, where the location information is used by the candidate micro base station to determine a first precoding matrix that is used when the candidate micro base station sends the reference signal to the UE.

With reference to the fourth aspect, in a first implementation manner of the fourth aspect, the allocating, by the macro base station, a candidate micro base station to the UE according to the location information of the UE includes: selecting, by the macro base station according to the location information of the UE and location information of the micro base stations in the heterogeneous network, at least one of micro base stations that effectively cover the UE as the candidate micro base station of the UE.

With reference to the fourth aspect and the foregoing implementation manner, in a second implementation manner of the fourth aspect, the method further includes: receiving, by the macro base station, a measurement report from the UE, where the measurement report is determined by the UE according to the reference signal received from the candidate micro base station, the measurement report includes channel information, and the channel information is used to indicate a state of a millimeter-wave band channel between the candidate micro base station and the UE; and selecting, by the macro base station from the candidate micro base station according to the measurement report, a micro base station that provides an access service for the UE.

With reference to the fourth aspect and the foregoing implementation manners, in a third implementation manner of the fourth aspect, the measurement report further includes identifier information of a second precoding matrix; and the method further includes: sending, by the macro base station, the identifier information of the second precoding matrix to the selected micro base station, to instruct the micro base station to precode, according to the second precoding matrix, a service signal sent to the UE.

With reference to the fourth aspect and the foregoing implementation manners, in a fourth implementation manner of the fourth aspect, the selecting, by the macro base station from the candidate micro base station according to the measurement report, a micro base station that provides an access service for the UE includes: selecting, from the candidate micro base station according to the measurement report, a candidate micro base station that meets a preset channel state condition, to provide an access service for the UE.

According to a fifth aspect, an embodiment of the present invention provides a method for communication in a heterogeneous network, where the heterogeneous network includes a macro base station and micro base stations, the micro base stations operate in a millimeter-wave band, and the method includes: receiving, by the micro base station, location information of UE from the macro base station, where the location information is used by the candidate micro base station to send a reference signal to the UE; determining, by the micro base station according to the location information, a first precoding matrix that is used when the micro base station sends the reference signal to the UE, and generating a precoded reference signal; and sending, by the micro base station, the precoded reference signal to the UE in a millimeter-wave band corresponding to the micro base station.

With reference to the fifth aspect, in a first implementation manner of the fifth aspect, the determining, by the micro base station according to the location information, a first precoding matrix that is used when the micro base station sends the reference signal to the UE, and generating a precoded reference signal includes: determining, by the micro base station according to the location information of the UE, (2L+1) first precoding matrices that are used when the micro base station sends reference signals to the UE, and correspondingly generating (2L+1) precoded reference signals, where L is a nonnegative integer.

With reference to the fifth aspect and the foregoing implementation manner, in a second implementation manner of the fifth aspect, the sending, by the micro base station, the precoded reference signal to the UE in a millimeter-wave band corresponding to the micro base station includes: sending, by the micro base station based on an SDMA technology, the (2L+1) precoded reference signals to the UE in the millimeter-wave band corresponding to the micro base station, where the (2L+1) precoded reference signals form (2L+1) beams whose center is a location of the UE and that cover a preset angle range.

With reference to the fifth aspect and the foregoing implementation manners, in a third implementation manner of the fifth aspect, the method further includes: receiving, by the micro base station, identifier information, sent by the macro base station, of a second precoding matrix; and precoding, by the micro base station according to the second precoding matrix, a service signal that is sent to the UE by using the sending unit.

According to a sixth aspect, an embodiment of the present invention provides a method for communication in a heterogeneous network, where the heterogeneous network includes a macro base station and micro base stations, the micro base stations operate in a millimeter-wave band, and the method includes: receiving, by user equipment UE, identifier information of a candidate micro base station from the macro base station, where the identifier information of the candidate micro base station is used by the user equipment UE to receive a reference signal sent by the candidate micro base station; receiving, by the UE according to the identifier information of the candidate micro base station, a precoded reference signal sent by the candidate micro base station, where a first precoding matrix used for precoding the reference signal is determined according to location information of the UE; determining, by the UE, a measurement report according to the received reference signal, where the measurement report includes channel information, and the channel information is used to indicate a state of a millimeter-wave band channel between the candidate micro base station and the UE; and sending, by the UE, the measurement report to the macro base station.

With reference to the sixth aspect, in a first implementation manner of the sixth aspect, the measurement report further includes identifier information of a micro base station that meets a preset channel state condition.

With reference to the sixth aspect and the foregoing implementation manner, in a second implementation manner of the sixth aspect, the measurement report further includes identifier information of a second precoding matrix, and receiving, by the UE, a service signal sent by a micro base station that is selected by the macro base station according to the measurement report, where the service signal is a signal that is obtained after precoding is performed by using the second precoding matrix.

With reference to the sixth aspect and the foregoing implementation manners, in a third implementation manner of the sixth aspect, the method further includes: sending, by the UE, the location information of the UE to the macro base station, so that the macro base station allocates the candidate micro base station to the UE according to the location information of the UE.

According to a seventh aspect, an embodiment of the present invention provides a heterogeneous network communications system, where the heterogeneous network communications system includes the foregoing macro base station and the foregoing micro base station.

Based on the foregoing technical solutions, in the embodiments of the present invention, a micro base station transmits a precoded reference signal to UE in a millimeter-wave band, where a precoding matrix used for the reference signal is determined by the micro base station according to location information of the UE; because beams corresponding to precoded reference signals are more concentrated, even if there is an obstruction between the micro base station and the UE, the UE can still receive the reference signal, and then can measure a state of a millimeter-wave band channel based on the reference signal.

**BRIEF DESCRIPTION OF DRAWINGS**

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

FIG. 1 is a schematic architectural diagram of an applicable heterogeneous network according to an embodiment of the present invention;
FIG. 2 is a schematic flowchart of a method for communication in a heterogeneous network according to an embodiment of the present invention;
FIG. 3 is a schematic flowchart of a method for communication in a heterogeneous network according to another embodiment of the present invention;
FIG. 4 is a schematic diagram of a location of UE relative to a micro base station according to an embodiment of the present invention;
FIG. 5 is a schematic diagram of a micro base station transmitting a reference signal according to an embodiment of the present invention;
FIG. 6 is a schematic flowchart of a method for communication in a heterogeneous network according to another embodiment of the present invention;
FIG. 7 is a schematic flowchart of a method for communication in a heterogeneous network according to another embodiment of the present invention;
FIG. 8 is a schematic block diagram of a macro base station according to an embodiment of the present invention;
FIG. 9 is a schematic block diagram of a micro base station according to an embodiment of the present invention;
FIG. 10 is a schematic block diagram of UE according to an embodiment of the present invention;
FIG. 11 is a schematic block diagram of a macro base station according to another embodiment of the present invention;
FIG. 12 is a schematic block diagram of a micro base station according to another embodiment of the present invention; and
FIG. 13 is a schematic block diagram of UE according to another embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

It should be understood that the technical solutions in the embodiments of the present invention may be applied to a heterogeneous network, where the heterogeneous network includes a macro base station and a micro base station. The macro base station and the micro base station may each operate in any communications system of the following communications systems: for example, a Global System for Mobile Communications (Global System of Mobile communication, "GSM" for short) system, a Code Division Multiple Access (Code Division Multiple Access, "CDMA" for short) system, a Wideband Code Division Multiple Access (Wideband Code Division Multiple Access, "WCDMA" for short) system, a general packet radio service (General Packet Radio Service, "GPRS" for short), a Long Term Evolution (Long Term Evolution, "LTE" for short) system, an LTE frequency division duplex (Frequency Division Duplex, "FDD" for short) system, LTE time division duplex (Time Division Duplex, "TDD" for short), a Universal Mobile Telecommunication System (Universal Mobile Telecommunication System, "UMTS" for short), and a Worldwide Interoperability for Microwave Access (Worldwide Interoperability for Microwave Access, "WiMAX" for short) communications system.

It should also be understood that in the embodiments of the present invention, user equipment (User Equipment, "UE" for short) may be referred to as a terminal (Terminal), a mobile station (Mobile Station, "MS" for short), a mobile terminal (Mobile Terminal), and the like. The user equipment may communicate with one or more core networks by using a radio access network (Radio Access Network, "RAN" for short). For example, the user equipment may be a mobile phone (also referred to as a "cellular" phone) or a computer with a mobile terminal. For example, the user equipment may also be a portable, pocket-sized, handheld, computer built-in, or in-vehicle mobile apparatus, which exchanges voice and/or data with the radio access network.

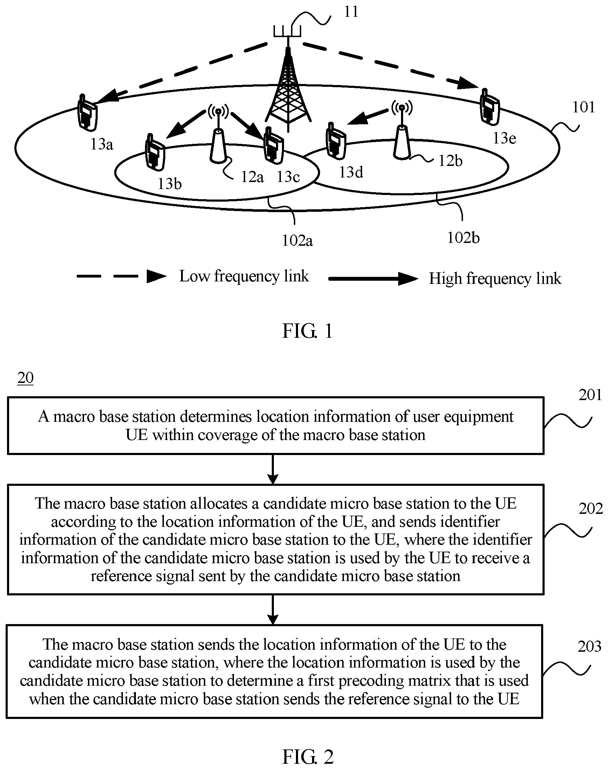

FIG. 1 is a schematic architectural diagram of an applicable heterogeneous network according to an embodiment of the present invention. A communications system shown in FIG. 1 includes a macro base station 11, micro base stations (12a, 12b), and UEs (13a, 13b, 13c, 13d, 13e). The macro base station 11 operates in a low frequency band, and communicates with the UEs (13a, 13b, 13c, 13d, 13e) by using a low frequency link. For example, the macro base station 11 operates in a frequency band lower than 3 GHz often used in a cellular communications system. The micro base stations (12a, 12b) operate in a high frequency band, and communicate with the UEs (13a, 13b, 13c, 13d, 13e) by using a high frequency link. For example, the micro base stations (12a, 12b) operate in a millimeter-wave frequency band of about 60 GHz.

It should be understood that, the low frequency link and the high frequency links are relative concepts. In a heterogeneous network into which a multi-carrier technology is introduced, a link operating on a relatively high frequency carrier is the high frequency link, and a link operating on a relatively low frequency carrier is the low frequency link. For example, the macro base station operates in 2 GHz, and a micro base station operates in 60 GHz; therefore, a link between UE and the macro base station is a low frequency link, and a link between UE and the micro base station is a high frequency link. For convenient description, the following embodiment is described by using the high frequency link and the low frequency link.

The macro base station 11 provides wide coverage, and a coverage area of the macro base station is a macro cell 101. The micro base stations (12a, 12b) may provide a high-speed data service for a user, and coverage areas of the micro base stations are small cells (102a, 102b). The heterogeneous network shown in FIG. 1 is used as an example for description, but quantities of macro base stations, micro base stations, and UEs are not limited in this embodiment of the present invention.

A large quantity of antennas are configured in the micro base stations (12a, 12b), and backhaul links exist between the macro base station 11 and the micro base stations (12a, 12b). The macro base station 11 and the micro base stations (12a, 12b) may communicate with each other by using the backhaul links. The macro base station 11 may further store information such as geographical location information and antenna array directions of the micro base stations (12a, 12b) within coverage of the macro base station 11. A single antenna is configured in each of the UEs (13a, 13b, 13c, 13d, 13e), and can operate in both the low frequency band and the high frequency band.

For example, in a communication process, to overcome a problem of excessive attenuation in a millimeter-wave signal in a transmission process, the micro base stations (12a, 12b) transmit signals to the UEs (13b, 13c, 13d) by using a beamforming technology. Before transmitting the signals to the UEs (13b, 13c, 13d) based on the beamforming technology, the micro base stations (12a, 12b) first need to learn location information of the UEs (13b, 13c, 13d). Specifically, the micro base stations or the macro base station may cooperate with a group of base stations having a positioning function, to transmit reference signals to the UEs (13b, 13c, 13d) over the low frequency link; because the reference signals in the low frequency band do not have the problem of excessive attenuation, it can be ensured that the reference signals are accurately received by the UEs; the UEs report strength indications of the reference signals received from different base stations to the base station, and then the base station completes positioning of the UEs based on triangulation. In this way, when transmitting signals, the micro base stations (12a, 12b) may aim maximum transmission directions of beams towards locations of the UEs. It should be noted that the foregoing positioning technology is one of existing positioning technologies; a positioning technology is not limited in the present invention, and any technology through which positioning information of UE can be obtained can be used in the present invention.

In this case, when obstructions exist between the micro base stations (12a, 12b) and the UEs (13b, 13c, 13d), an obstruction penetration capability of the millimeter-wave signals is far lower than that of low frequency signals; and because a millimeter wave has a relatively large transmission loss, compared with low frequency signals, there are no sufficient reflective and refractive links. The two reasons lead to asymmetry between a low frequency channel and a millimeter-wave channel. These obstructions will not cause transmission failures of the reference signals in the low frequency band, but will cause the millimeter-wave signals to be unable to reach the UEs (13b, 13c, 13d) effectively. Therefore, even if the micro base stations (12a, 12b) can obtain accurate location information of the UEs, the micro base stations (12a, 12b) cannot perform effective millimeter-wave communication with the UEs (13b, 13c, 13d). In other words, when obstructions exist between the micro base stations (12a, 12b) and the UEs (13b, 13c, 13d), in the foregoing method, states of millimeter-wave channels between the micro base stations and the UEs cannot be accurately obtained, that is, it cannot be determined whether obstructions exist on the millimeter-wave channels. In a case that millimeter-wave communication fails, the UEs are forced to switch to the low frequency link to receive services from the macro base station, and cannot obtain high-speed wireless access services provided by the micro base stations through millimeter-wave communication. Therefore, a proportion of services offloaded by the micro base stations from the macro base station is greatly reduced, causing a decrease in communication efficiency of the heterogeneous network.

The embodiments of the present invention provide a method for communication in a heterogeneous network, a macro base station, a micro base station, and user equipment, to measure a state of a millimeter-wave band channel between a micro base station and UE. In this way, the UE can access a proper micro base station in a millimeter-wave band to perform communication, which ensures effectiveness of millimeter-wave communication and improves efficiency of millimeter-wave communication.

FIG. 2 is a schematic flowchart of a method for communication in a heterogeneous network according to an embodiment of the present invention. A method 20 in FIG. 2 may be executed by a macro base station in the heterogeneous network. The heterogeneous network includes the macro base station and micro base stations, where the micro base stations operate in a millimeter-wave band, and the macro base station operates in a frequency band whose frequency is lower than that of the millimeter-wave band. For example, the macro base station is the macro base station 11 shown in FIG. 1.

201. The macro base station determines location information of user equipment UE within coverage of the macro base station.

For example, the UE may obtain the location information of the UE by using a GNSS (Global Navigation Satellite System, Global Navigation Satellite System), or obtain the location information of the UE by using a cellular network or a WiFi (Wireless Fidelity, Wireless Fidelity) network, and then report the location information to the macro base station by using a low frequency link.

For another example, the macro base station may corporate with a group of macro base stations having a positioning function, to transmit reference signals used exclusively for positioning to the UE over the low frequency link. The UE measures energy strength of the reference signals from different base stations on the low frequency link, and reports, according to measurement results, RSSIs (Received Signal Strength Indication, received signal strength indicator) corresponding to different base stations to the macro base station over the low frequency link. Finally, the macro base station determines, according to the results reported by the UE, the location information of the UE by means of triangulation.

202. The macro base station allocates a candidate micro base station to the UE according to the location information of the UE, and sends identifier information of the candidate micro base station to the UE, where the identifier information of the candidate micro base station is used by the UE to receive a reference signal sent by the candidate micro base station.

For example, after allocating the candidate micro base station to the UE, the macro base station sends the identifier information of the candidate micro base station to the UE. The UE receives, according to the identifier information of the candidate micro base station, the reference signal in a millimeter-wave band corresponding to the candidate micro base station. A specific time-frequency resource, of the millimeter-wave band, corresponding to the candidate micro base station may be preconfigured on a UE side.

203. The macro base station allocates a candidate micro base station to the UE according to the location information of the UE, and sends identifier information of the candidate micro base station to the UE, where the identifier information of the candidate micro base station is used by the UE to receive a reference signal sent by the candidate micro base station.

For example, after allocating the candidate micro base station to the UE, the macro base station sends, to the candidate micro base station, the location information of the UE within coverage of the candidate micro base station. The location information of the UE may include an angle of arrival between the UE and the candidate micro base station or a geographical location of the UE. For example, the geographical location of the UE may be represented in a form of longitude and latitude in GPS information reported by the UE.

In this way, the candidate micro base station transmits the reference signal in the millimeter-wave band towards the location of the UE; therefore, a channel state of a millimeter-wave band channel between the candidate micro base station and the UE can be measured. Specifically, a time-frequency resource, of the millimeter-wave band, used by the candidate micro base station to send the reference signal may be preconfigured by the macro base station. Generally, time-frequency resources used by different micro base stations are orthogonal to each other.

Based on the foregoing technical solution, in this embodiment of the present invention, a micro base station transmits a precoded reference signal to UE in a millimeter-wave band, where a precoding matrix used for the reference signal is determined by the micro base station according to location information of the UE; because beams corresponding to precoded reference signals are more concentrated, even if there is an obstruction between the micro base station and the UE, the UE can still receive the reference signal, and then can measure a state of a millimeter-wave band channel based on the reference signal.

Further, the micro base station may precode a service signal based on the state of the millimeter-wave band channel, that is, based on a second precoding matrix, and then transmit a precoded service signal to the UE, instead of directly transmitting a signal based on a location of the UE. According to this embodiment of the present invention, the channel state of the millimeter-wave band channel between the micro base station and the UE can be measured. In this way, effectiveness of millimeter-wave communication is ensured, and efficiency of millimeter-wave communication performed by the micro base station is improved.

In addition, under the premise that the state of the millimeter-wave channel between the micro base station and the UE is accurately learned, a case in which the UE switches to a low frequency link to receive a service as a result of a millimeter-wave communication failure caused by asymmetry between a low frequency channel and a millimeter-wave channel can be prevented. In this way, a proportion of traffic offloaded by the micro base station from a macro base station can be increased, which further improves communication efficiency of a heterogeneous network.

It should be understood that the macro base station may allocate one or more candidate micro base stations to the UE. In a case that the macro base station allocates one candidate micro base station to the UE, the UE only needs to receive, in the millimeter-wave band, a reference signal transmitted by the candidate micro base station, and determine, according to the reference signal, a measurement report indicating the state of the millimeter-wave channel. In a case that the macro base station allocates multiple candidate micro base stations to the UE, the UE needs to separately receive reference signals from the multiple candidate micro base stations in the millimeter-wave band, and determine, according to the reference signals, a measurement report indicating the state of the millimeter-wave channel.

It should also be understood that the millimeter-wave band refers to a wave band whose unit of wavelength is millimeter, and is a broad concept. In a propagation process, the millimeter-wave band has features of a large transmission loss, few paths, LOS links as main links, and a poor capability of penetrating through an obstruction. In addition to electromagnetic waves of 1 millimeter to 10 millimeters, other electromagnetic waves close to the wavelength range also belong to the millimeter-wave band defined in this embodiment of the present invention, for example, an electromagnetic wave whose wavelength is 0.99 millimeters. That is, all electromagnetic waves that have the foregoing features and whose units of wavelength are on a millimeter level shall fall within the protection scope of this embodiment of the present invention.

It should also be understood that execution order between step 202 and step 203 is not limited in this embodiment of the present invention. In addition, when the heterogeneous network is constructed, some functions of the macro base station may be added to the micro base stations. For example, in this case, in step 202, a micro base station may allocate a candidate micro base station to the UE, and instruct the UE to receive, according to identifier information of the candidate micro base station, a reference signal sent by the candidate micro base station. In step 203, the micro base station may instruct the candidate micro base station to send the reference signal to the UE according to the location information of the UE, and in this case, the candidate micro base station may be the micro base station.

Optionally, in an embodiment, when the macro base station allocates the candidate micro base station to the UE according to the location information of the UE, the macro base station selects, according to the location information of the UE and location information of the micro base stations in the heterogeneous network, at least one of micro base stations that effectively cover the UE as the candidate micro base station of the UE.

It should be understood that the micro base stations that effectively cover the UE may be determined according to a threshold of a receiver of the UE. For example, if quality of a signal sent by a micro base station and received by the UE is greater than the threshold of the receiver, the micro base station is a micro base station that effectively covers the UE. Specifically, the quality of the signal received by the UE from the micro base station may be estimated according to information such as a loss of a path between the UE and the micro base station and transmit power of the micro base station.

For example, in a case that the macro base station pre-stores the location information of the micro base stations, the macro base station may determine coverage of each micro base station connected to the macro base station. In this way, according to the location information of the UE and the location information of the micro base stations, the macro base station may allocate a micro base station that effectively covers the UE to the UE as the candidate micro base station of the UE, and in this case, the UE is potential served UE of the candidate micro base station. Specifically, when deploying the heterogeneous network, an operator may store information such as precise locations and antenna array directions of the micro base stations in the corresponding macro base station.

In a case that micro base stations are densely deployed, each UE may have multiple candidate micro base stations. In addition, when allocating a candidate micro base station to the UE, the macro base station may also refer to the information such as the antenna directions of the micro base stations. In this way, a candidate micro base station can be allocated to each UE in a more proper way. It should be understood that this also falls within the protection scope of this embodiment of the present invention.

In addition, when determining potential served UE for a micro base station, the macro base station may ensure that a quantity of potential served UEs of each micro base station is far less than a quantity of antennas configured in the micro base station. For example, in a case that 100 antennas are configured in each micro base station, the macro base station determines no more than 10 UEs for each micro base station as potential served UEs of the micro base station according to distances between UEs and the micro base station. In this way, efficiency of millimeter-wave communication can be further improved.

Optionally, in another embodiment, the macro base station may further receive a measurement report from the UE, where the measurement report is determined by the UE according to the reference signal received from the candidate micro base station, the measurement report includes channel information, and the channel information is used to indicate a state of a millimeter-wave band channel between the candidate micro base station and the UE. In this case, the macro base station selects, from the candidate micro base station according to the measurement report, a micro base station that provides an access service for the UE.

For example, the macro base station configures a serving base station for the UE according to the measurement report reported by the UE. Specifically, a candidate micro base station that has a good channel state (for example, a candidate micro base station that meets a preset channel state condition) may be preferentially configured as a serving base station of the UE, and in a case that the channel state of the micro base station does not meet the preset condition, the macro base station is configured as a serving base station of the UE.

According to the foregoing method, after accurately learning the channel state of the millimeter-wave channel between the UE and the micro base station, the macro base station selects a suitable base station from all candidate micro base stations according to the measurement report sent by the UE, to provide an access service for the UE. In this way, a proportion of traffic offloaded by the micro base station from the macro base station can be increased, which further improves communication efficiency of the heterogeneous network.

Optionally, in another embodiment, the measurement report further includes identifier information of a second precoding matrix. In this case, the macro base station sends the identifier information of the second precoding matrix to the selected micro base station, to instruct the micro base station to precode, according to the second precoding matrix, a service signal sent to the UE.

Optionally, in another embodiment, when the macro base station selects, from the candidate micro base station and the macro base station according to the measurement report, a base station that provides an access service for the UE, the macro base station may select, from the candidate micro base station according to the measurement report, a candidate micro base station that meets a preset channel state condition, to provide an access service for the UE. Alternatively, if the measurement report does not include identifier information of a micro base station that meets a preset channel state condition, the macro base station is selected to provide an access service for the UE.

For example, information indicating the channel state may be channel state information (Channel State Information, CSI). When there are multiple candidate micro base stations that meet the preset channel state condition according to the measurement report reported by the UE, one or more candidate micro base stations that have the best channel states may be selected from the multiple candidate micro base stations that meet the condition, to provide an access service for the UE. In this case, if multiple candidate micro base stations are used as serving base stations, when transmitting data to the UE, the candidate micro base stations use respective precoding matrices to encode a same data signal.

Alternatively, if the measurement report does not include identifier information of a micro base station that meets the preset channel state condition, in this case, the macro base station may provide an access service for the UE by using the low frequency link.

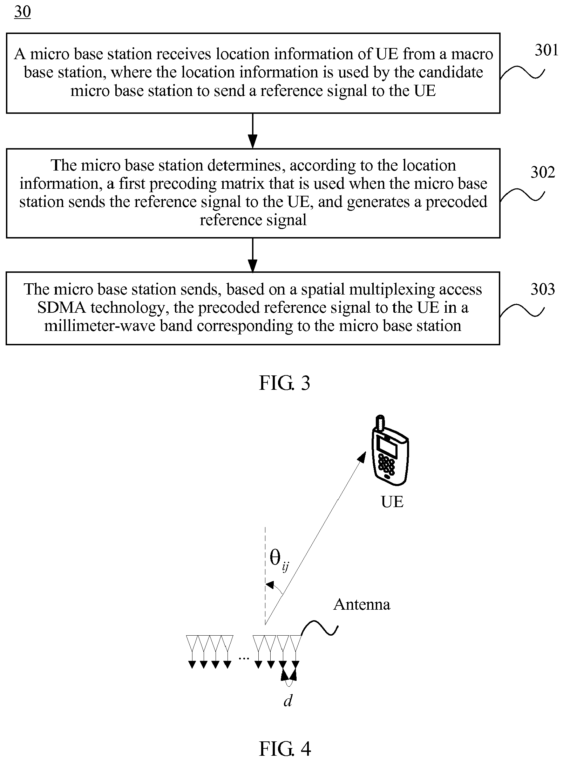

FIG. 3 is a schematic flowchart of a method for communication in a heterogeneous network according to another embodiment of the present invention. A method 30 in FIG. 3 may be executed by a micro base station in the heterogeneous network. The heterogeneous network includes a macro base station and micro base stations, where the micro base stations operate in a millimeter-wave band, and the macro base station operates in a frequency band whose frequency is lower than that of the millimeter-wave band. For example, the micro base station is either of the micro base stations (12a, 12b) shown in FIG. 1.

301. The micro base station receives location information of UE from the macro base station, where the location information is used by the candidate micro base station to send a reference signal to the UE.

For example, after allocating a candidate micro base station to each UE, the macro base station sends, to the micro base station, location information of all potential served UEs corresponding to the micro base station. The location information of the UE may be an angle of arrival between the UE and the candidate micro base station or a geographical location of the UE. For example, the geographical location of the UE may be represented in a form of longitude and latitude in GPS information reported by the UE.

302. The micro base station determines, according to the location information, a first precoding matrix that is used when the micro base station sends the reference signal to the UE, and generates a precoded reference signal.

For example, according to candidate micro base stations allocated by the macro base station to UEs, each candidate micro base station may have multiple potential served UEs. In this case, the micro base station determines, for each of the potential served UEs according to location information of the UEs, a precoding matrix that is used when the micro base station sends a reference signal, so as to match different states of channels between different potential served UEs and the micro base station to the greatest extent. In this way, precoded reference signals can better reach the UEs, so that the UEs measure the states of the millimeter-wave band channels according to the received reference signals.

303. The micro base station sends, based on a spatial division multiplexing access SDMA technology, the precoded reference signal to the UE in a millimeter-wave band corresponding to the micro base station.

For example, different micro base stations use different time-frequency resources to transmit reference signals, so as to avoid mutual interference between different micro base stations. Generally, time-frequency resources used by different micro base stations are orthogonal to each other in a time domain or a frequency domain or both the time domain and the frequency domain. Specifically, the macro base station may pre-allocate a time-frequency resource to each micro base station. When transmitting reference signals to all potential served UEs, a micro base station may transmit, based on the spatial division multiplexing access SDMA technology, a reference signal to each potential served UE. In this way, mutual interference between reference signals sent to different UEs can be avoided.

It should be noted that, in the embodiments of the present invention, the SDMA technology used by a micro base station to send various signals to UEs in a millimeter-wave band is a technology used to mark beams that have different directions but same frequency to perform frequency multiplexing, and can achieve the objective of reducing interference between signals and improving signal quality. However, for the technical problem to be resolved by the present invention, the SDMA technology does not constitute a limitation. A micro base station may not use the SDMA technology to send various signals to UEs in a millimeter-wave band.

For convenient description, it is assumed that a reference sign of the micro base station is $i$. A group of potential served UEs of the micro base station $i$ is represented by $U(i)$, where $UE_j \in U(i)$, and a reference signal $\mathbf{x}_{ij}^{(l)}$ transmitted by the micro base station $i$ on a time-frequency resource $l$ may be represented by formula (1):

$$\mathbf{x}_{ij}^{(l)} = \sum_{j \in U(i)} \mathbf{p}_{ij}^{(l)} s_i \qquad (1)$$

where $\mathbf{p}_{ij}^{(l)}$ is a precoding matrix that is used when the reference signal is transmitted on the time-frequency resource $l$, and $s_i$ is an original reference signal of the micro base station $i$.

A reason why mutual interference between different UEs can be avoided by using a precoded reference signal determined by formula (1) in an application scenario of a large-diameter antenna array is described in detail herein. It is assumed that a single antenna is configured in the UE. In this case, if singular value decomposition is performed on a response vector $\mathbf{H}_{ij}^{(l)}$ of a channel between $UE_j$ and the micro base station $i$, $\mathbf{H}_{ij}^{(l)}$ may be represented by formula (2):

$$\mathbf{H}_{ij}^{(l)} = \mathbf{U}_{ij}^{(l)} \Sigma_{ij}^{(l)} \mathbf{V}_{ij}^{(l)*} \qquad (2)$$

where $\Sigma_{ij}^{(l)}$ is an $N \times N$ diagonal matrix, and only the first element on a diagonal is not zero, where $(\cdot)^*$ herein represents

obtaining a conjugate transpose of an independent variable. Therefore, formula (2) can be further transformed into formula (3):

$$\mathbf{H}_{ij}^{(l)} = \beta_{ij}^{(l)} \mathbf{V}_{ij}^{(l)}(\cdot,1)^{*} \qquad (3)$$

Further, because LOS transmission is mainly performed on a millimeter-wave channel it means $\mathbf{V}_{ij}^{(l)}(\cdot,1) \approx \mathbf{p}_{ij}^{(l)}$. According to a random matrix theory, when there are sufficient transmit antennas, for example, more than 100 antennas, $\mathbf{p}_{ij}^{(l)*}\mathbf{p}_{ij'}^{(l)} = 0$, where $j,j' \in U(i), j \neq j$

It can be deduced that $\mathbf{H}_{ij}^{(l)}\mathbf{p}_{ij'}^{(l)}s_i = \beta_{ij}^{(l)}\mathbf{V}_{ij}^{(l)}(\cdot,1)^{*}\mathbf{p}_{ij'}^{(l)}s_i = \beta_{ij}^{(l)}\mathbf{p}_{ij}^{(l)*}\mathbf{p}_{ij'}^{(l)}s_i = 0$. That is, when the reference signal transmitted by the micro base station $i$ to $UE_{j'}$ reaches $UE_j$, received signal strength becomes 0. In conclusion, in the application scenario of the large-diameter antenna array, when the micro base station transmits reference signals to different UEs according to formula (1), no mutual interference between different UEs is caused.

Based on the foregoing technical solution, in this embodiment of the present invention, a micro base station transmits a precoded reference signal to UE in a millimeter-wave band, where a precoding matrix used for the reference signal is determined by the micro base station according to location information of the UE; because beams corresponding to precoded reference signals are more concentrated, even if there is an obstruction between the micro base station and the UE, the UE can still receive the reference signal, and then can measure a state of a millimeter-wave band channel based on the reference signal.

Further, the micro base station may precode a service signal based on the state of the millimeter-wave band channel, that is, based on a second precoding matrix, and then transmit a precoded service signal to the UE, instead of directly transmitting a signal based on a location of the UE. According to this embodiment of the present invention, the channel state of the millimeter-wave band channel between the micro base station and the UE can be measured. In this way, effectiveness of millimeter-wave communication is ensured, and efficiency of millimeter-wave communication performed by the micro base station is improved.

In addition, under the premise that the state of the millimeter-wave channel between the micro base station and the UE is accurately learned, a case in which the UE switches to a low frequency link to receive a service as a result of a millimeter-wave communication failure caused by asymmetry between a low frequency channel and a millimeter-wave channel can be prevented. In this way, a proportion of traffic offloaded by the micro base station from a macro base station can be increased, which further improves communication efficiency of a heterogeneous network.

Further, the micro base station respectively transmits reference signals to potential served UEs by using an SDMA technology, which can save time-frequency resources needed for transmitting the reference signals and avoid a need to occupy different time-frequency resources. In addition, when sending the reference signal to the UE in the millimeter-wave band according to the location information of the UE, the micro base station may generate a corresponding precoding matrix according to the location information of the UE, and precode the reference signal by using the precoding matrix, to enhance directivity of the reference signal and improve channel measurement efficiency.

It should be understood that the millimeter-wave band refers to a wave band whose unit of wavelength is millimeter, and is a broad concept. In a propagation process, the millimeter-wave band has features of a large transmission loss, few paths, LOS links as main links, and a poor capability of penetrating through an obstruction. In addition to electromagnetic waves of 1 millimeter to 10 millimeters, other electromagnetic waves close to the wavelength range also belong to the millimeter-wave band defined in this embodiment of the present invention, for example, an electromagnetic wave whose wavelength is 0.99 millimeters. That is, all electromagnetic waves that have the foregoing features and whose units of wavelength are on a millimeter level shall fall within the protection scope of this embodiment of the present invention.

Optionally, in an embodiment, when the micro base station determines, according to the location information, the first precoding matrix that is used when the micro base station sends the reference signal to the UE, and generates the precoded reference signal, the micro base station determines, according to the location information of the UE, (2L+1) first precoding matrices that are used when the micro base station sends reference signals to the UE, and correspondingly generates (2L+1) precoded reference signals, where L is a nonnegative integer.

For example, for convenient description, it is assumed that the original reference signal of the micro base station $i$ is $s_i$, and a potential served UE corresponding to the micro base station $i$ is represented by $UE_j$, where $j = 0,1,...., K$-1 and K is a quantity of UEs within coverage of the macro base station. $N$ antennas are configured in each micro base station, and an inter-antenna distance is $d$. In this case, an $l$th precoding matrix $\mathbf{p}_{ij}^{(l)}$ that is used when the micro base station $i$ transmits a reference signal to $UE_j$ may be determined according to formula (4):

$$\mathbf{p}_{ij}^{(l)} = \frac{1}{\sqrt{N}} \left[ 1 \; e^{j2\pi \frac{d\sin\theta_{ij}^{(l)}}{\lambda}} \; e^{j2\pi \frac{2d\sin\theta_{ij}^{(l)}}{\lambda}} \; \mathrm{L} \; e^{j2\pi \frac{(N-1)d\sin\theta_{ij}^{(l)}}{\lambda}} \right]^T \tag{4}$$

where $\lambda$ represents a wavelength of a millimeter wave, $\theta_{ij}^{(l)} = \theta_{ij} + l\Delta\theta$, and $-L \le l \le L$. $L$ is a value determined comprehensively according to multiple factors such as a positioning precision requirement and a quantity of time-frequency resources. $\theta_{ij}$ is an angle of arrival of the UE relative to the micro base station. FIG. 4 is a schematic diagram of a location of UE relative to a micro base station according to an embodiment of the present invention. As shown in FIG. 4, $N$ antennas are configured in the micro base station, and an inter-antenna distance is $d$. The location of the UE relative to the micro base station may be represented by an angle of arrival $\theta_{ij}$ of the UE relative to one antenna among multiple antennas configured in the micro base station and a distance between the UE and the antenna. It should be noted that the angle of arrival is related to a direction of a beam, and the distance is related to transmit energy of the beam. Because impact of the transmit energy on performance is far less than impact of the direction on performance, same transmit power is used in this embodiment. $\Delta\theta$ in the foregoing formula is a preset value, and may be specifically determined with full consideration of factors such as positioning precision, antenna array directivity, a UE quantity, and a quantity of resources used to transmit reference signals. For example, $\Delta\theta$ herein may be 1°.

When the reference signals are precoded by using the (2L+1) precoding matrices determined according to the foregoing method, to perform beamforming transmission, (2L+1) beams whose difference in transmission angles is $\Delta\theta$ can be generated. The first precoded reference signal transmitted by the micro base station $i$ to $UE_j$ may be written as $p_{ij}^{(1)} s_i$.

(2L+1) reference signals are generated according to the foregoing method, which can lower a precision requirement on the location information of the UE. The micro base station transmits beams that have different transmission angles and that bear the reference signals generated in the foregoing step, and in this way, beams whose center is a location of the UE and that cover a certain angle range can be formed. Therefore, a probability of system performance degrading caused by low positioning precision can be reduced.

Specifically, UE positioning precision in an existing positioning technology cannot satisfy a precision requirement needed when a signal is transmitted in a millimeter-wave band. Therefore, if positioning information is determined directly based on the positioning technology, and data is transmitted in the millimeter-wave band by using a precoding matrix that is determined according to a location of the UE relative to the micro base station, system performance may deteriorate rapidly. However, according to the method in this embodiment of the present invention, a problem of a high precision requirement on a UE location caused when beamforming transmission to UE is performed simply according to location information of the UE can be avoided.

Optionally, in another embodiment, when the micro base station sends, based on the spatial division multiplexing access SDMA technology, the precoded reference signal to the UE in the millimeter-wave band corresponding to the micro base station, the micro base station sends, based on the SDMA technology, the (2L+1) precoded reference signals to the UE in the millimeter-wave band corresponding to the micro base station, where the (2L+1) precoded reference signals form (2L+1) beams that are centered in the location of the UE and cover a preset angle range.

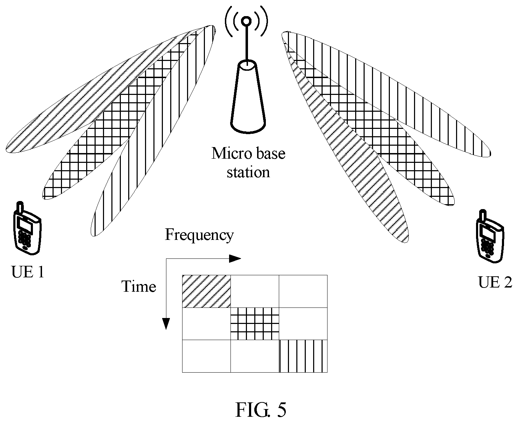

For example, FIG. 5 is a schematic diagram of a micro base station transmitting a reference signal according to an embodiment of the present invention. As shown in FIG. 5, time-frequency resources used by the micro base station to transmit different precoded reference signals to UE 1 are orthogonal to each other in both a time domain and a frequency domain. The micro base station transmits reference signals to UE 1 and UE 2 by using a spatial multiplexing technology. In this way, reference signals can be transmitted to different UEs by using a same time-frequency resource. When the micro base station transmits multiple reference signal beams to each UE, each reference signal beam occupies a different time-frequency resource. In addition, multiple beams transmitted to same UE are centered around the UE, and cover a certain angle range.

Different micro base stations use orthogonal time-frequency resources to transmit reference signals, so as to avoid mutual interference between different micro base stations. Generally, time-frequency resources used by different micro base stations are orthogonal to each other in a time domain or a frequency domain or both the time domain and the frequency domain. Specifically, the macro base station may pre-allocate a time-frequency resource to each micro base station.

It is assumed that $M_{max}$ represents a maximum quantity of micro base stations within coverage of the macro base station, and $i$ represents a reference sign of the micro base station, where $i \leq M_{max}$. $N_{max}$ represents a quantity of orthogonal frequency resources (a quantity of subcarriers) of a high frequency link. Because bandwidth of the high frequency link is extremely large, it can be assumed that $M_{max} \leq N_{max}$ certainly holds. When the micro base station $i$ occupies (2L+1) orthogonal time-frequency resources in total to transmit reference signals, a location corresponding to an $l^{th}$ time-frequency resource may be determined according to formula (5), where $f(l)$ represents a location in the frequency domain, and $t(l)$ represents a location in time:

$$\begin{cases} f(l) = (i + l + L) \bmod N_{max} \\ t(l) = (l + L) \bmod \lceil (2L+1) M_{max} / N_{max} \rceil \end{cases} \quad (5)$$

where $M_{max}$ and $N_{max}$ are preset during heterogeneous network designing, and are known to the macro base station and the UE. It should be understood that formula (5) is merely an example, and the protection scope of this embodiment of the present invention is not limited thereto.

Optionally, in another embodiment, the micro base station may further receive identifier information, sent by the macro base station, of a second precoding matrix. In this way, the micro base station precodes, according to the second precoding matrix, a service signal that is sent to the UE by using the sending unit.

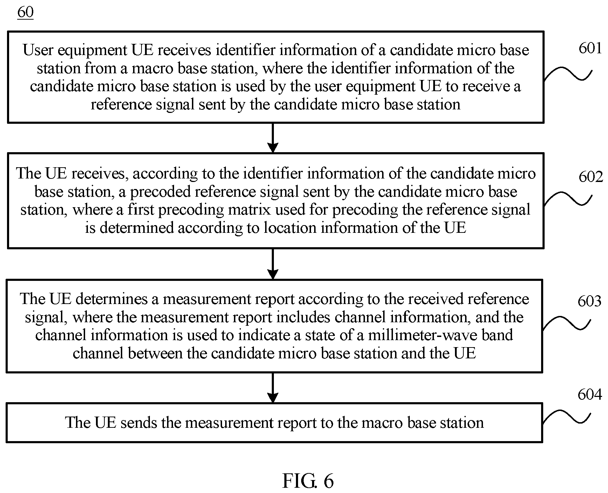

FIG. 6 is a schematic flowchart of a method for communication in a heterogeneous network according to another embodiment of the present invention. A method 60 in FIG. 6 may be executed by UE. The UE accesses the heterogeneous network to perform communication. The heterogeneous network includes a macro base station and micro base stations, where the micro base stations operate in a millimeter-wave band, and the macro base station operates in a frequency band whose frequency is lower than that of the millimeter-wave band. For example, the UE is any one of the UEs (13a, 13b, 13c, 13d, 13e) shown in FIG. 1.

601. The user equipment UE receives identifier information of a candidate micro base station from the macro base station, where the identifier information of the candidate micro base station is used by the user equipment UE to receive a reference signal sent by the candidate micro base station.

For example, each UE may have one or more candidate micro base stations.

602. The UE receives, according to the identifier information of the candidate micro base station, a precoded reference signal sent by the candidate micro base station, where a first precoding matrix used for precoding the reference signal is determined according to location information of the UE.

For example, the UE may learn a time-frequency resource corresponding to each micro base station in advance. In this case, the UE may determine, according to the identifier information of the candidate micro base station in reference signal receiving signaling, a time-frequency resource that is used when the candidate micro base station sends the reference signal. Therefore, the UE can receive, on a corresponding time-frequency resource, the reference signal transmitted by the candidate micro base station.

603. The UE determines a measurement report according to the received reference signal, where the measurement report includes channel information, and the channel information is used to indicate a state of a millimeter-wave band channel between the candidate micro base station and the UE.

For example, the UE obtains identifiers of candidate micro base stations from the macro base station by using a low frequency link, and generates corresponding original reference signals by using same methods as those used by the micro base stations. The reference signals are received on time-frequency resources used by the micro base stations to transmit the reference signals, and chancel estimation is performed at these locations. It should be noted that, because the locations of the time-frequency resources used to transmit the reference signals are generated through calculation according to the identifiers of the micro base stations, the UE may obtain, by obtaining the identifiers of the candidate micro base stations in the low frequency link, the locations of the time-frequency resources used by these micro base stations. Specifically, the UE may estimate receive energy of the reference signals on corresponding resources by using the generated original reference signals, and compare a largest energy value among estimation results with a preset threshold. If the largest energy value is greater than the threshold, it is considered that a micro base station and a used precoding matrix $\mathbf{p}_{ij}^{(l)}$ that correspond to the time-frequency resource meet a requirement. In this case, statistics on serial numbers of all micro base stations that meet the requirement and serial numbers of corresponding precoding matrices that meet the requirement may be collected as final channel estimation results, and the measurement report is generated according to the channel estimation results.

604. The UE sends the measurement report to the macro base station.

Based on the foregoing technical solution, in this embodiment of the present invention, a micro base station transmits a precoded reference signal to UE in a millimeter-wave band, where a precoding matrix used for the reference signal is determined by the micro base station according to location information of the UE; because beams corresponding to precoded reference signals are more concentrated, even if there is an obstruction between the micro base station and the UE, the UE can still receive the reference signal, and then can measure a state of a millimeter-wave band channel based on the reference signal.

Further, the micro base station may precode a service signal based on the state of the millimeter-wave band channel, that is, based on a second precoding matrix, and then transmit a precoded service signal to the UE, instead of directly transmitting a signal based on a location of the UE. According to this embodiment of the present invention, the channel state of the millimeter-wave band channel between the micro base station and the UE can be measured. In this way, effectiveness of millimeter-wave communication is ensured, and efficiency of millimeter-wave communication performed by the micro base station is improved.

In addition, under the premise that the state of the millimeter-wave channel between the micro base station and the UE is accurately learned, a case in which the UE is forced to switch to a low frequency link to receive a service as a result of a millimeter-wave communication failure caused by asymmetry between a low frequency channel and a millimeter-wave channel can be prevented. In this way, a proportion of traffic offloaded by the micro base station from a macro base station can be increased, which further improves communication efficiency of a heterogeneous network.

It should be understood that the macro base station may allocate one or more candidate micro base stations to the UE. In a case that the macro base station allocates one candidate micro base station to the UE, the UE only needs to receive, in the millimeter-wave band, a reference signal transmitted by the candidate micro base station, and determine, according to the reference signal, a measurement report indicating the state of the millimeter-wave channel.

In a case that the macro base station allocates multiple candidate micro base stations to the UE, the UE needs to separately receive reference signals from the multiple candidate micro base stations in the millimeter-wave band, and determine, according to the reference signals, a measurement report indicating the state of the millimeter-wave channel. For example, in a case that the UE has multiple candidate micro base stations, the UE may directly report the measurement report to the micro base stations, and the micro base stations provide access services for the UE according to measurement results.

It should also be understood that the millimeter-wave band refers to a wave band whose unit of wavelength is millimeter, and is a broad concept. In a propagation process, the millimeter-wave band has features of a large transmission loss, few paths, LOS links as main links, and a poor capability of penetrating through an obstruction. In addition to electromagnetic waves of 1 millimeter to 10 millimeters, other electromagnetic waves close to the wavelength range also belong to the millimeter-wave band defined in this embodiment of the present invention, for example, an electromagnetic wave whose wavelength is 0.99 millimeters. That is, all electromagnetic waves that have the foregoing features and whose units of wavelength are on a millimeter level shall fall within the protection scope of this embodiment of the present invention.

Optionally, in an embodiment, the measurement report includes identifier information of a candidate micro base station that meets a preset channel state condition and identifier information of a precoding matrix.

For example, the measurement report generated by the UE herein may include a micro base station whose receive energy is the greatest and a serial number indication of a corresponding precoding matrix, or several micro base stations whose receive energy is the greatest and serial number indications of corresponding precoding matrices. When the UE does not obtain a channel estimation result that meets the condition, the UE may feed back a string of preset special characters in the measurement report. In this case, the macro base station may provide an access service for the UE.

Optionally, in another embodiment, the measurement report further includes identifier information of a second precoding matrix. In this case, the UE receives a service signal sent by a micro base station that is selected by the macro base station according to the measurement report, where the service signal is a signal that is obtained after precoding is performed by using the second precoding matrix.

Optionally, in another embodiment, the UE may further send the location information of the UE to the macro base station, so that the macro base station allocates the candidate micro base station to the UE according to the location information of the UE.

For example, the UE may obtain the location information of the UE by using a GNSS, or obtain the location information of the UE by using a cellular network or a WiFi network, and then report the location information to the macro base station by using the low frequency link.

In this way, the macro base station no longer needs to measure a location of the UE, which reduces system overheads.

In an embodiment, the embodiment of the present invention further provides a heterogeneous network communications system, where the network communications system of the heterogeneous network includes the foregoing macro base station and the foregoing micro base station.

The embodiments of the present invention are described in detail below with reference to specific examples.

It should be noted that these examples are merely intended to help a person skilled in the art better understand the embodiments of the present invention and not to limit the scope of the embodiments of the present invention.

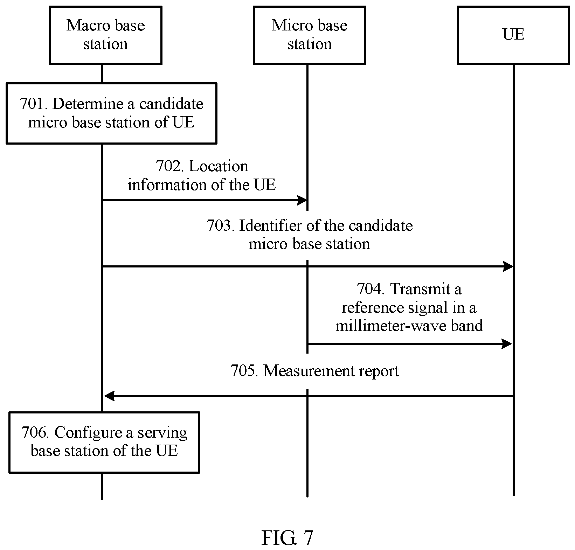

FIG. 7 is a schematic flowchart of a method for communication in a heterogeneous network according to another embodiment of the present invention.

701. A macro base station determines a candidate micro base station of UE.

For example, the macro base station determines location information of the user equipment UE within coverage of the macro base station, and then allocates the candidate micro base station to the UE according to the location information of the UE.

Specifically, the UE may obtain the location information of the UE by using a GNSS, or obtain the location information of the UE by using a cellular network or a WiFi network, and then report the location information to the macro base station by using a low frequency link. For another example, the macro base station may corporate with a group of base stations (macro base stations or micro base stations) having a positioning function, to transmit reference signals used exclusively for positioning to the UE over the low frequency link. The UE measures energy strength of the reference signals from different base stations on the low frequency link, and reports, according to measurement results, RSSIs corresponding to different base stations to the macro base station over the low frequency link. Finally, the macro base station determines, according to the results reported by the UE, the location information of the UE by means of triangulation.

After learning the location information of the UE, the macro base station may select, according to the location information of the UE and location information of micro base stations in the heterogeneous network, a micro base station that covers the UE as the candidate micro base station of the UE. In this case, the UE is potential served UE of the candidate micro base station.

In a case that micro base stations are densely deployed, each UE may have multiple candidate micro base stations. In addition, when allocating a candidate micro base station to the UE, the macro base station may also refer to information such as antenna directions of the micro base stations. In this way, a candidate micro base station can be allocated to each UE in a more proper way. It should be understood that this also falls within the protection scope of this embodiment of the present invention.

702. The macro base station sends location information of the UE to the candidate micro base station.

For example, after allocating the candidate micro base station to the UE, the macro base station sends the location information of the potential served UE of the candidate micro base station to the candidate micro base station. The location information of the UE may be an angle of arrival between the UE and the candidate micro base station or geographical location information of the UE. For the latter, transmitted information is more abundant, but load is heavier; after receiving the geographical location information of the UE, the candidate micro base station needs to calculate the angle of arrival between the candidate micro base station and the UE.

703. The macro base station sends an identifier of the candidate micro base station to the UE.

For example, after allocating the candidate micro base station to the UE, the macro base station sends the identifier of the candidate micro base station to the UE. In this way, after receiving reference signal receiving signaling, the UE may receive a reference signal in a millimeter-wave band corresponding to the candidate micro base station. A specific time-frequency resource, of the millimeter-wave band, corresponding to the candidate micro base station may be preconfigured on a UE side.

704. The micro base station transmits a reference signal to the UE according to the location information of the UE received in step 702.

For example, after receiving the location information of the UE, the micro base station sends, based on a spatial division multiplexing access SDMA technology, a precoded reference signal to each UE among at least one UE on the time-frequency resource of the millimeter-wave band corresponding to the micro base station.

Different micro base stations use different time-frequency resources to transmit reference signals, so as to avoid mutual interference between different micro base stations. Generally, time-frequency resources used by different micro base stations are orthogonal to each other in a time domain or a frequency domain or both the time domain and the frequency domain. Specifically, the macro base station may pre-allocate a time-frequency resource to each micro base station. When transmitting reference signals to all potential served UEs, a micro base station may transmit, based on the spatial division multiplexing access SDMA technology, a reference signal to each potential served UE. In this way, mutual interference between reference signals sent to different UEs can be avoided.

705. The UE sends a measurement report to the macro base station according to the identifier of the candidate micro base station received in step 703.

For example, the UE obtains identifiers of candidate micro base stations from the macro base station by using a low frequency link, and generates corresponding original reference signals by using same methods as those used by the micro base stations. The reference signals are received on time-frequency resources used by the micro base stations to transmit the reference signals, and chancel estimation is performed at these locations.

Specifically, the UE may estimate receive energy of the reference signals on corresponding resources by using the generated original reference signals, and compare a largest energy value among estimation results with a preset threshold. If the largest energy value is greater than the threshold, it is considered that a micro base station and a used precoding matrix that correspond to the time-frequency resource meet a requirement. In this case, statistics on serial numbers of all micro base stations that meet the requirement and serial numbers of corresponding precoding matrices that meet the requirement may be collected as final channel estimation results, and the measurement report is generated according to the channel estimation results. Finally, the UE sends the measurement report to the macro base station.

706. The macro base station configures a serving base station of the UE according to the measurement report received in step 705.

For example, the macro base station may select, according to the measurement report, one or more candidate micro base stations among candidate micro base stations and whose channel states are the best as a serving base station or serving base stations of the UE. Alternatively, if the measurement report does not include identifier information of a micro base station that meets a preset channel state condition, the macro base station is selected as a serving base station of the UE.

When there are multiple candidate micro base stations that meet the preset channel state condition according to the measurement report reported by the UE, one or more candidate micro base stations that have the best channel states may be selected as a serving base station or serving base stations of the UE from the multiple candidate micro base stations that meet the condition. In this case, if multiple candidate micro base stations are used as serving base stations, when transmitting data to the UE, the candidate micro base stations use respective precoding matrices to encode a same data signal.

Based on the foregoing technical solution, in this embodiment of the present invention, a micro base station transmits a reference signal to UE in a millimeter-wave band, and then a state of a millimeter-wave channel between the micro base station and the UE can be accurately learned. In this way, effectiveness of millimeter-wave communication is ensured, and efficiency of millimeter-wave communication performed by the micro base station is improved.

In addition, under the premise that the state of the millimeter-wave channel between the micro base station and the UE is accurately learned, a case in which the UE is forced to switch to a low frequency link to receive a service as a result of a millimeter-wave communication failure caused by asymmetry between a low frequency channel and a millimeter-wave channel can be prevented. In this way, a proportion of traffic offloaded by the micro base station from a macro base station can be increased, which further improves communication efficiency of a heterogeneous network.

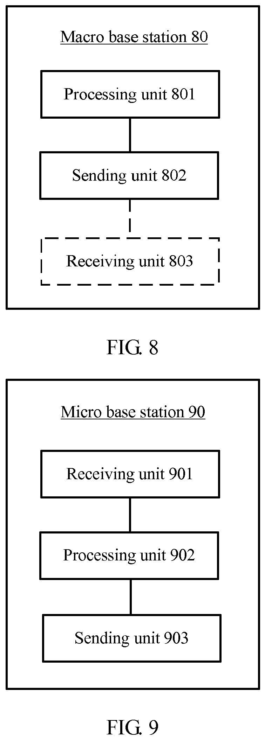

FIG. 8 is a schematic block diagram of a macro base station according to an embodiment of the present invention. A macro base station 80 belongs to a heterogeneous network, and the heterogeneous network further includes micro base stations. The micro base stations operate in a millimeter-wave band, and the macro base station 80 may operate in a frequency band whose frequency is lower than that of the millimeter-wave band. Specifically, the macro base station 80 includes a processing unit 801 and a sending unit 802.

The processing unit 801 is configured to determine location information of user equipment UE within coverage of the macro base station, and allocate a candidate micro base station to the UE according to the location information of the UE.

For example, the UE may obtain the location information of the UE by using a GNSS (Global Navigation Satellite System, Global Navigation Satellite System), or obtain the location information of the UE by using a cellular network or a WiFi (Wireless Fidelity, Wireless Fidelity) network, and then report the location information to the macro base station by using a low frequency link. Finally, the macro base station allocates the candidate micro base station to the UE according to the location information of the UE.

For another example, the macro base station may corporate with a group of base stations (macro base stations or micro base stations) having a positioning function, to transmit reference signals used exclusively for positioning to the UE over the low frequency link. The UE measures energy strength of the reference signals from different base stations on the low frequency link, and reports, according to measurement results, RSSIs (Received Signal Strength Indication, received signal strength indicator) corresponding to different base stations to the macro base station over the low frequency link. Finally, the macro base station determines, according to the results reported by the UE, the location information of the UE by means of triangulation.

The sending unit 802 is configured to send identifier information of the candidate micro base station to the UE, where the identifier information of the candidate micro base station is used by the UE to receive a reference signal sent by the candidate micro base station.

For example, after allocating the candidate micro base station to the UE, the macro base station sends the identifier information of the candidate micro base station to the UE. The UE receives, according to the identifier information of the candidate micro base station, the reference signal in a millimeter-wave band corresponding to the candidate micro base station. A specific time-frequency resource, of the millimeter-wave band, corresponding to the candidate micro base station may be preconfigured on a UE side.

The sending unit 802 is further configured to send the location information of the UE to the candidate micro base station, where the location information is used by the candidate micro base station to determine a first precoding matrix that is used when the candidate micro base station sends the reference signal to the UE.

For example, after allocating the candidate micro base station to the UE, the macro base station sends, to the candidate micro base station, the location information of the UE within coverage of the candidate micro base station. The location information of the UE may be an angle of arrival between the UE and the candidate micro base station or geographical location information of the UE. For the latter, transmitted information is more abundant, but load is heavier; after receiving the geographical location information of the UE, the candidate micro base station needs to calculate the angle of arrival between the candidate micro base station and the UE.

In this way, the candidate micro base station transmits the reference signal in the millimeter-wave band towards the location of the UE; therefore, a channel state of a millimeter-wave band channel between the candidate micro base station and the UE can be measured. Specifically, a time-frequency resource, of the millimeter-wave band, used by the candidate micro base station to send the reference signal may be preconfigured by the macro base station. Generally, time-frequency resources used by different micro base stations are orthogonal to each other.

Based on the foregoing technical solution, in this embodiment of the present invention, a micro base station transmits a precoded reference signal to UE in a millimeter-wave band, where a precoding matrix used for the reference signal is determined by the micro base station according to location information of the UE; because beams corresponding to precoded reference signals are more concentrated, even if there is an obstruction between the micro base station and the UE, the UE can still receive the reference signal, and then can measure a state of a millimeter-wave band channel based on the reference signal.

Further, the micro base station may precode a service signal based on the state of the millimeter-wave band channel, that is, based on a second precoding matrix, and then transmit a precoded service signal to the UE, instead of directly transmitting a signal based on a location of the UE. According to this embodiment of the present invention, the channel state of the millimeter-wave band channel between the micro base station and the UE can be measured. In this way, effectiveness of millimeter-wave communication is ensured, and efficiency of millimeter-wave communication performed by the micro base station is improved.

In addition, under the premise that the state of the millimeter-wave channel between the micro base station and the UE is accurately learned, a case in which the UE is forced to switch to a low frequency link to receive a service as a result of a millimeter-wave communication failure caused by asymmetry between a low frequency channel and a millimeter-wave channel can be prevented. In this way, a proportion of traffic offloaded by the micro base station from a macro base station can be increased, which further improves communication efficiency of a heterogeneous network.

It should be understood that the macro base station may allocate one or more candidate micro base stations to the UE. In a case that the macro base station allocates one candidate micro base station to the UE, the UE only needs to receive, in the millimeter-wave band, a reference signal transmitted by the candidate micro base station, and determine, according to the reference signal, a measurement report indicating the state of the millimeter-wave channel. In a case that the macro base station allocates multiple candidate micro base stations to the UE, the UE needs to separately receive reference signals from the multiple candidate micro base stations in the millimeter-wave band, and determine, according to the reference signals, a measurement report indicating the state of the millimeter-wave channel.

It should also be understood that the millimeter-wave band refers to a wave band whose unit of wavelength is millimeter, and is a broad concept. In a propagation process, the millimeter-wave band has features of a large transmission loss, few paths, LOS links as main links, and a poor capability of penetrating through an obstruction. In addition to electromagnetic waves of 1 millimeter to 10 millimeters, other electromagnetic waves close to the wavelength range also belong to the millimeter-wave band defined in this embodiment of the present invention, for example, an electromagnetic wave whose wavelength is 0.99 millimeters. That is, all electromagnetic waves that have the foregoing features and whose units of wavelength are on a millimeter level shall fall within the protection scope of this embodiment of the present invention.

It should also be understood that, order in which the sending unit 802 sends reference signal receiving signaling and reference signal sending signaling is not limited in this embodiment of the present invention. In addition, when the heterogeneous network is constructed, some functions of the macro base station may be added to the micro base stations. For example, in this case, a micro base station may allocate a candidate micro base station to the UE, and instruct the UE to receive, in the millimeter-wave band according to identifier information of the candidate micro base station, a reference signal sent by the candidate micro base station. Alternatively, a micro base station may instruct the candidate micro base station to send the reference signal to the UE in the millimeter-wave band according to the location information of the UE, and in this case, the candidate micro base station may be the micro base station.

Optionally, in an embodiment, the processing unit 801 is specifically configured to select, according to the location information of the UE and location information of the micro base stations in the heterogeneous network, at least one of micro base stations that cover the UE as the candidate micro base station of the UE.

It should be understood that the micro base stations that effectively cover the UE may be determined according to a threshold of a receiver of the UE. For example, if quality of a signal sent by a micro base station and received by the UE is greater than the threshold of the receiver, the micro base station is a micro base station that effectively covers the UE. Specifically, the quality of the signal received by the UE from the micro base station may be estimated according to information such as a loss of a path between the UE and the micro base station and transmit power of the micro base station.

For example, in a case that the macro base station pre-stores the location information of the micro base stations, the macro base station may determine coverage of each micro base station connected to the macro base station. In this way, according to the location information of the UE and the location information of the micro base stations, the macro base station may allocate a micro base station that effectively covers the UE to the UE as the candidate micro base station of the UE, and in this case, the UE is potential served UE of the candidate micro base station. Specifically, when deploying the heterogeneous network, an operator may store information such as precise locations and antenna array directions of the micro base stations in the corresponding macro base station.

In a case that micro base stations are densely deployed, each UE may have multiple candidate micro base stations. In addition, when allocating a candidate micro base station to the UE, the macro base station may also refer to the information such as the antenna directions of the micro base stations. In this way, a candidate micro base station can be allocated to each UE in a more proper way. It should be understood that this also falls within the protection scope of this embodiment of the present invention.

In addition, when determining potential served UE for a micro base station, the macro base station may ensure that a quantity of potential served UEs of each micro base station is far less than a quantity of antennas configured in the micro base station. For example, in a case that 100 antennas are configured in each micro base station, the macro base station determines no more than 10 UEs for each micro base station as potential served UEs of the micro base station according to distances between UEs and the micro base station. In this way, efficiency of millimeter-wave communication can be further improved.

Optionally, in another embodiment, the macro base station 80 further includes a receiving unit 803. The receiving unit 803 is configured to receive a measurement report from the UE, where the measurement report is determined by the UE according to the reference signal received from the candidate micro base station, the measurement report includes channel information, and the channel information is used to indicate a state of a millimeter-wave band channel between the candidate micro base station and the UE. In this case, the processing unit 801 is further configured to select, from the candidate micro base station according to the measurement report, a micro base station that provides an access service for the UE.

For example, the macro base station configures a serving base station for the UE according to the measurement report reported by the UE. Specifically, a candidate micro base station that has a good channel state (for example, a candidate micro base station that meets a preset channel state condition) may be preferentially configured as a serving base station of the UE, and in a case that the channel state of the micro base station does not meet the preset condition, the macro base station is configured as a serving base station of the UE.

According to the foregoing method, after accurately learning the channel state of the millimeter-wave channel between the UE and the micro base station, the macro base station selects a suitable base station from all candidate micro base stations according to the measurement report sent by the UE, to provide an access service for the UE. In this way, a proportion of traffic offloaded by the micro base station from the macro base station can be increased, which further improves communication efficiency of the heterogeneous network.

Optionally, in another embodiment, the processing unit 801 is specifically configured to select, from the candidate micro base station according to the measurement report, a candidate micro base station that meets a preset channel state condition, to provide an access service for the UE. Alternatively, if the measurement report does not include identifier information of a micro base station that meets a preset channel state condition, the macro base station is selected to provide an access service for the UE.

For example, information indicating the channel state may be channel state information (Channel State Information, CSI). When there are multiple candidate micro base stations that meet the preset channel state condition according to the measurement report reported by the UE, one or more candidate micro base stations that have the best channel states may be selected from the multiple candidate micro base stations that meet the condition, to provide an access service for the UE. In this case, if multiple candidate micro base stations are used as serving base stations, when transmitting data to the UE, the candidate micro base stations use respective precoding matrices to encode a same data signal.

Alternatively, if the measurement report does not include identifier information of a micro base station that meets the preset channel state condition, in this case, the macro base station may provide an access service for the UE by using the low frequency link.

Optionally, in another embodiment, the measurement report further includes identifier information of a second precoding matrix. The sending unit 802 is further configured to send the identifier information of the second precoding matrix to the selected micro base station, to instruct the micro base station to precode, according to the second precoding matrix, a service signal sent to the UE.

FIG. 9 is a schematic block diagram of a micro base station according to an embodiment of the present invention.

A micro base station 90 belongs to a heterogeneous network, and the heterogeneous network further includes a macro base station. The micro base station 90 operates in a millimeter-wave band, and the macro base station operates in a frequency band whose frequency is lower than that of the millimeter-wave band. The micro base station 90 includes a receiving unit 901, a processing unit 902, and a sending unit 903.

The receiving unit 901 is configured to receive location information of UE from the macro base station, where the location information is used by the candidate micro base station to send a reference signal to the UE.

For example, after allocating a candidate micro base station to each UE, the macro base station sends, to the micro base station, location information of all potential served UEs corresponding to the micro base station. The location information of the UE may be an angle of arrival between the UE and the candidate micro base station or geographical location information of the UE. For example, the geographical location of the UE may be represented in a form of longitude and latitude in GPS information reported by the UE.

The processing unit 902 is configured to determine, according to the location information, a first precoding matrix that is used when the micro base station sends the reference signal to the UE, and generate a precoded reference signal.

For example, according to candidate micro base stations allocated by the macro base station to UEs, each candidate micro base station may have multiple potential served UEs. In this case, the micro base station determines, for each of the potential served UEs according to location information of the UEs, a precoding matrix that is used when the micro base station sends a reference signal, so as to match different states of channels between different potential served UEs and the micro base station to the greatest extent. In this way, precoded reference signals can better reach the UEs, so that the UEs measure the states of the millimeter-wave band channels according to the received reference signals.

The sending unit 903 is configured to send, based on a spatial division multiplexing access SDMA technology, the precoded reference signal to the UE in a millimeter-wave band corresponding to the micro base station.

For example, different micro base stations use different time-frequency resources to transmit reference signals, so as to avoid mutual interference between different micro base stations. Generally, time-frequency resources used by different micro base stations are orthogonal to each other in a time domain or a frequency domain or both the time domain and the frequency domain. Specifically, the macro base station may pre-allocate a time-frequency resource to each micro base station. When transmitting reference signals to all potential served UEs, a micro base station may transmit, based on the spatial division multiplexing access SDMA technology, a reference signal to each potential served UE. In this way, mutual interference between reference signals sent to different UEs can be avoided.

For convenient description, it is assumed that a reference sign of the micro base station is $i$. A group of potential served UEs of the micro base station $i$ is represented by $U(i)$, where $UE_j \in U(i)$, and a reference signal $\mathbf{x}_{ij}^{(l)}$ transmitted by the micro base station $i$ on a time-frequency resource $l$ may be represented by formula (6):

$$\mathbf{x}_{ij}^{(l)} = \sum_{j \in U(i)} \mathbf{p}_{ij}^{(l)} s_i \qquad (6)$$

where $\mathbf{p}_{ij}^{(l)}$ is a precoding matrix that is used when the reference signal is transmitted on the time-frequency resource $l$, and $s_i$ is an original reference signal of the micro base station $i$.

A reason why mutual interference between different UEs can be avoided by using a precoded reference signal determined by formula (6) in an application scenario of a large-diameter antenna array is described in detail herein. It is assumed that a single antenna is configured in the UE. In this case, if singular value decomposition is performed on a response vector $\mathbf{H}_{ij}^{(l)}$ of a channel between $UE_j$ and the micro base station $i$, $\mathbf{H}_{ij}^{(l)}$ may be represented by formula (7):

$$\mathbf{H}_{ij}^{(l)} = \mathbf{U}_{ij}^{(l)} \Sigma_{ij}^{(l)} \mathbf{V}_{ij}^{(l)*} \qquad (7)$$

where $\Sigma_{ij}^{(l)}$ is an $N \times N$ diagonal matrix, and only the first element on a diagonal is not zero, where $(\cdot)^*$ herein represents obtaining a conjugate transpose of an independent variable. Therefore, formula (7) can be further transformed into formula (8):

$$\mathbf{H}_{ij}^{(l)} = \beta_{ij}^{(l)} \mathbf{V}_{ij}^{(l)}(\cdot,1)^* \qquad (8)$$

Further, because LOS transmission is mainly performed on a millimeter-wave channel, it means $\mathbf{V}_{ij}^{(l)}(\cdot,1) \approx \mathbf{p}_{ij}^{(l)}$. According to a random matrix theory, when there are sufficient transmit antennas, for example, more than 100 antennas, $\mathbf{p}_{ij}^{(l)*}\mathbf{p}_{ij'}^{(l)} = 0$, where $j,j' \in U(i), j \neq j'$.

It can be deduced that $\mathbf{H}_{ij}^{(l)}\mathbf{p}_{ij'}^{(l)}s_i = \beta_{ij}^{(l)}\mathbf{V}_{ij}^{(l)}(\cdot,1)^*\mathbf{p}_{ij'}^{(l)}s_i = \beta_{ij}^{(l)}\mathbf{p}_{ij}^{(l)*}\mathbf{p}_{ij'}^{(l)}s_i = 0$. That is, when the reference signal transmitted by the micro base station $i$ to $UE_{j'}$ reaches $UE_j$, received signal strength becomes 0. In conclusion, in the application scenario of the large-diameter antenna array, when the micro base station transmits reference signals to different UEs according to formula (1), no mutual interference between different UEs is caused.

Based on the foregoing technical solution, in this embodiment of the present invention, a micro base station transmits a precoded reference signal to UE in a millimeter-wave band, where a precoding matrix used for the reference signal is determined by the micro base station according to location information of the UE; because beams corresponding to precoded reference signals are more concentrated, even if there is an obstruction between the micro base station and the UE, the UE can still receive the reference signal, and then can measure a state of a millimeter-wave band channel based on the reference signal.

Further, the micro base station may precode a service signal based on the state of the millimeter-wave band channel, that is, based on a second precoding matrix, and then transmit a precoded service signal to the UE, instead of directly transmitting a signal based on a location of the UE. According to this embodiment of the present invention, the channel state of the millimeter-wave band channel between the micro base station and the UE can be measured. In this way, effectiveness of millimeter-wave communication is ensured, and efficiency of millimeter-wave communication performed by the micro base station is improved.

In addition, under the premise that the state of the millimeter-wave channel between the micro base station and the UE is accurately learned, a case in which the UE switches to a low frequency link to receive a service as a result of a millimeter-wave communication failure caused by asymmetry between a low frequency channel and a millimeter-wave channel can be prevented. In this way, a proportion of traffic offloaded by the micro base station from a macro base station can be increased, which further improves communication efficiency of a heterogeneous network.

Further, the micro base station respectively transmits reference signals to potential served UEs by using an SDMA technology, which can save time-frequency resources needed for transmitting the reference signals and avoid a need to occupy different time-frequency resources. In addition, when sending the reference signal to the UE in the millimeter-wave band according to the location information of the UE, the micro base station may generate a corresponding precoding matrix according to the location information of the UE, and precode the reference signal by using the precoding matrix, to enhance directivity of the reference signal and improve channel measurement efficiency.

It should be understood that the millimeter-wave band refers to a wave band whose unit of wavelength is millimeter, and is a broad concept. In a propagation process, the millimeter-wave band has features of a large transmission loss, few paths, LOS links as main links, and a poor capability of penetrating through an obstruction. In addition to electromagnetic waves of 1 millimeter to 10 millimeters, other electromagnetic waves close to the wavelength range also belong to the millimeter-wave band defined in this embodiment of the present invention, for example, an electromagnetic wave whose wavelength is 0.99 millimeters. That is, all electromagnetic waves that have the foregoing features and whose units of wavelength are on a millimeter level shall fall within the protection scope of this embodiment of the present invention.

Optionally, in an embodiment, the processing unit 902 is specifically configured to determine, according to the location information of the UE, (2L+1) first precoding matrices that are used when the micro base station sends reference signals to the UE, and correspondingly generate (2L+1) precoded reference signals, where L is a nonnegative integer.

For example, for convenient description, it is assumed that the original reference signal of the micro base station $i$ is $s_i$, and a potential served UE corresponding to the micro base station $i$ is represented by $UE_j$, where $j = 0,1,....,K-1$, and $K$ is a quantity of UEs within coverage of the macro base station. $N$ antennas are configured in each micro base station, and an inter-antenna distance is $d$. In this case, an $l^{\text{th}}$ precoding matrix $\mathbf{p}_{ij}^{(l)}$ that is used when the micro base station $i$ transmits a reference signal to $UE_j$ may be determined according to formula (9):

$$\mathbf{p}_{ij}^{(l)} = \frac{1}{\sqrt{N}} \left[ 1 \; e^{j2\pi \frac{d\sin\theta_{ij}^{(l)}}{\lambda}} \; e^{j2\pi \frac{2d\sin\theta_{ij}^{(l)}}{\lambda}} \; \mathrm{L} \; e^{j2\pi \frac{(N-1)d\sin\theta_{ij}^{(l)}}{\lambda}} \right]^{T}$$

$$(9)$$

where $\lambda$ represents a wavelength of a millimeter wave, $\theta_{ij}^{(l)} = \theta_{ij} + l\Delta\theta$, and $-L \leq l \leq L$. $L$ is a value determined comprehensively according to multiple factors such as a positioning precision requirement and a quantity of time-frequency resources. $\theta_{ij}$ is an angle of arrival of the UE relative to the micro base station. FIG. 4 is a schematic diagram of a location of UE relative to a micro base station according to an embodiment of the present invention. As shown in FIG. 4, $N$ antennas are configured in the micro base station, and an inter-antenna distance is $d$. The location of the UE relative to the micro base station may be represented by an angle of arrival $\theta_{ij}$ of the UE relative to one antenna among multiple antennas configured in the micro base station and a distance between the UE and the antenna. It should be noted that the angle of arrival is related to a direction of a beam, and the distance is related to transmit energy of the beam. Because impact of the transmit energy on performance is far less than impact of the direction on performance, same transmit power is used in this embodiment. $\Delta\theta$ in the foregoing formula is a preset value, and may be specifically determined with full consideration of factors such as positioning precision, antenna array directivity, a UE quantity, and a quantity of resources used to transmit reference signals. For example, $\Delta\theta$ herein may be 1°.

When the reference signals are precoded by using the (2L+1) precoding matrices determined according to the foregoing method, to perform beamforming transmission, (2L+1) beams whose difference in transmission angles is $\Delta\theta$ can be generated. The first precoded reference signal transmitted by the micro base station $i$ to $UE_j$ may be written as

$p_{ij}^{(1)} s_i$.

(2L+1) reference signals are generated according to the foregoing method, which can lower a precision requirement on the location information of the UE. The micro base station transmits beams that have different transmission angles and that bear the reference signals generated in the foregoing step, and in this way, beams whose center is a location of the UE and that cover a certain angle range can be formed. Therefore, a probability of system performance degrading caused by low positioning precision can be reduced.

Specifically, UE positioning precision in an existing positioning technology cannot satisfy a precision requirement needed when a signal is transmitted in a millimeter-wave band. Therefore, if positioning information is determined directly based on the positioning technology, and data is transmitted in the millimeter-wave band by using a precoding matrix that is determined according to a location of the UE relative to the micro base station, system performance may deteriorate rapidly. However, according to the method in this embodiment of the present invention, a problem of a high precision requirement on a UE location caused when beamforming transmission to UE is performed simply according to location information of the UE can be avoided.

Optionally, in another embodiment, the sending unit 903 is specifically configured to send, based on an SDMA technology, the (2L+1) precoded reference signals to the UE in the millimeter-wave band corresponding to the micro base station, where the (2L+1) precoded reference signals form (2L+1) beams whose center is a location of the UE and that cover a preset angle range.

For example, FIG. 5 is a schematic diagram of a micro base station transmitting a reference signal according to an embodiment of the present invention. As shown in FIG. 5, time-frequency resources used by the micro base station to transmit different precoded reference signals to UE 1 are orthogonal to each other in both a time domain and a frequency domain. The micro base station transmits reference signals to UE 1 and UE 2 by using a spatial multiplexing technology. In this way, reference signals can be transmitted to different UEs by using a same time-frequency resource. When the micro base station transmits multiple reference signal beams to each UE, each reference signal beam occupies a different time-frequency resource. In addition, multiple beams transmitted to same UE are centered around the UE, and cover a certain angle range.

Different micro base stations use orthogonal time-frequency resources to transmit reference signals, so as to avoid mutual interference between different micro base stations. Generally, time-frequency resources used by different micro base stations are orthogonal to each other in a time domain or a frequency domain or both the time domain and the frequency domain. Specifically, the macro base station may pre-allocate a time-frequency resource to each micro base station.

It is assumed that $M_{max}$ represents a maximum quantity of micro base stations within coverage of the macro base station, and $i$ represents a reference sign of the micro base station, where $i \leq M_{max}$. $N_{max}$ represents a quantity of orthogonal frequency resources (a quantity of subcarriers) of a high frequency link. Because bandwidth of the high frequency link is extremely large, it can be assumed that $M_{max} \leq N_{max}$ certainly holds. When the micro base station $i$

occupies (2L+1) orthogonal time-frequency resources in total to transmit reference signals, a location corresponding to an $l^{th}$ time-frequency resource may be determined according to formula (10), where $f(l)$ represents a location in the frequency domain, and $t(l)$ represents a location in time:

$$\begin{cases} f(l) = (i+l+L) \bmod N_{\max} \\ t(l) = (l+L) \bmod \lceil (2L+1)M_{\max} / N_{\max} \rceil \end{cases} \qquad (10)$$

where $M_{\max}$ and $N_{\max}$ are preset during heterogeneous network designing, and are known to the macro base station and the UE. It should be understood that formula (5) is merely an example, and the protection scope of this embodiment of the present invention is not limited thereto.

Optionally, in another embodiment, the receiving unit 901 is further configured to receive identifier information, sent by the macro base station, of a second precoding matrix. In this case, the processing unit 902 is further configured to precode, according to the second precoding matrix, a service signal that is sent to the UE by using the sending unit.

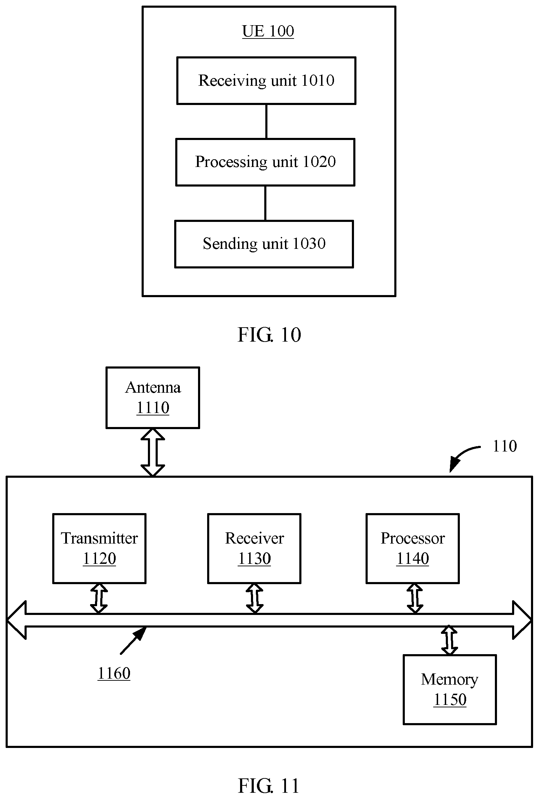

FIG. 10 is a schematic block diagram of UE according to an embodiment of the present invention. UE 100 includes a receiving unit 1010, a processing unit 1020, and a sending unit 1030. The UE 100 accesses a heterogeneous network to perform communication. The heterogeneous network includes a macro base station and micro base stations, where the micro base stations operate in a millimeter-wave band, and the macro base station operates in a frequency band whose frequency is lower than that of the millimeter-wave band.

The receiving unit 1010 is configured to receive identifier information of a candidate micro base station from a macro base station, where the identifier information of the candidate micro base station is used by the user equipment UE to receive a reference signal sent by the candidate micro base station.

For example, each UE may have one or more candidate micro base stations.

The receiving unit 1010 is further configured to receive, according to the identifier information of the candidate micro base station, a precoded reference signal sent by the candidate micro base station, where a first precoding matrix used for precoding the reference signal is determined according to location information of the UE.

For example, the UE may learn a time-frequency resource corresponding to each micro base station in advance. In this case, the UE may determine, according to the identifier information of the candidate micro base station in reference signal receiving signaling, a time-frequency resource that is used when the candidate micro base station sends the reference signal. Therefore, the UE can receive, on a corresponding time-frequency resource, the reference signal transmitted by the candidate micro base station.

The processing unit 1020 is configured to determine a measurement report according to the received reference signal, where the measurement report includes channel information, and the channel information is used to indicate a state of a millimeter-wave band channel between the candidate micro base station and the UE.

For example, the UE obtains identifiers of candidate micro base stations from the macro base station by using a low frequency link, and generates corresponding original reference signals by using same methods as those used by the micro base stations. The reference signals are received on time-frequency resources used by the micro base stations to transmit the reference signals, and chancel estimation is performed at these locations. It should be noted that, because the locations of the time-frequency resources used to transmit the reference signals are generated through calculation according to the identifiers of the micro base stations, the UE may obtain, by obtaining the identifiers of the candidate micro base stations in the low frequency link, the locations of the time-frequency resources used by these micro base stations. Specifically, the UE may estimate receive energy of the reference signals on corresponding resources by using the generated original reference signals, and compare a largest energy value among estimation results with a preset threshold. If the largest energy value is greater than the threshold, it is considered that a micro base station and a used precoding matrix $\mathbf{p}_{ij}^{(l)}$ that correspond to the time-frequency resource meet a requirement. In this case, statistics on serial numbers of all micro base stations that meet the requirement and serial numbers of corresponding precoding matrices that meet the requirement may be collected as final channel estimation results, and the measurement report is generated according to the channel estimation results.

The sending unit 1030 is configured to send the measurement report to the macro base station.

Based on the foregoing technical solution, in this embodiment of the present invention, a micro base station transmits a precoded reference signal to UE in a millimeter-wave band, where a precoding matrix used for the reference signal is determined by the micro base station according to location information of the UE; because beams corresponding to precoded reference signals are more concentrated, even if there is an obstruction between the micro base station and the UE, the UE can still receive the reference signal, and then can measure a state of a millimeter-wave band channel based on the reference signal.

Further, the micro base station may precode a service signal based on the state of the millimeter-wave band channel, that is, based on a second precoding matrix, and then transmit a precoded service signal to the UE, instead of directly transmitting a signal based on a location of the UE. According to this embodiment of the present invention, the channel state of the millimeter-wave band channel between the micro base station and the UE can be measured. In this way, effectiveness of millimeter-wave communication is ensured, and efficiency of millimeter-wave communication performed by the micro base station is improved.

In addition, under the premise that the state of the millimeter-wave channel between the micro base station and the UE is accurately learned, a case in which the UE is forced to switch to a low frequency link to receive a service as a result of a millimeter-wave communication failure caused by asymmetry between a low frequency channel and a millimeter-wave channel can be prevented. In this way, a proportion of traffic offloaded by the micro base station from a macro base station can be increased, which further improves communication efficiency of a heterogeneous network.

It should be understood that the macro base station may allocate one or more candidate micro base stations to the UE. In a case that the macro base station allocates one candidate micro base station to the UE, the UE only needs to receive, in the millimeter-wave band, a reference signal transmitted by the candidate micro base station, and determine, according to the reference signal, a measurement report indicating the state of the millimeter-wave channel.

In a case that the macro base station allocates multiple candidate micro base stations to the UE, the UE needs to separately receive reference signals from the multiple candidate micro base stations in the millimeter-wave band, and determine, according to the reference signals, a measurement report indicating the state of the millimeter-wave channel. For example, in a case that the UE has multiple candidate micro base stations, the UE may directly report the measurement report to the micro base stations, and the micro base stations provide access services for the UE according to measurement results.

It should also be understood that the millimeter-wave band refers to a wave band whose unit of wavelength is millimeter, and is a broad concept. In a propagation process, the millimeter-wave band has features of a large transmission loss, few paths, LOS links as main links, and a poor capability of penetrating through an obstruction.

In addition to electromagnetic waves of 1 millimeter to 10 millimeters, other electromagnetic waves close to the wavelength range also belong to the millimeter-wave band defined in this embodiment of the present invention, for example, an electromagnetic wave whose wavelength is 0.99 millimeters. That is, all electromagnetic waves that have the foregoing features and whose units of wavelength are on a millimeter level shall fall within the protection scope of this embodiment of the present invention.

Optionally, in an embodiment, the measurement report includes identifier information of a candidate micro base station that meets a preset channel state condition and identifier information of a corresponding precoding matrix.

For example, the measurement report generated by the UE herein may include a micro base station whose receive energy is the greatest and a serial number indication of a corresponding precoding matrix, or several micro base stations whose receive energy is the greatest and serial number indications of corresponding precoding matrices. When the UE does not obtain a channel estimation result that meets the condition, the UE may feed back a string of preset special characters in the measurement report. In this case, the macro base station may provide an access service for the UE.

Optionally, in another embodiment, the measurement report further includes identifier information of a second precoding matrix. In this case, the receiving unit 1010 is further configured to receive a service signal sent by a micro base station that is selected by the macro base station according to the measurement report, where the service signal is a signal that is obtained after precoding is performed by using the second precoding matrix.

Optionally, in another embodiment, the sending unit 1030 is further configured to send the location information of the UE to the macro base station, so that the macro base station allocates the candidate micro base station to the UE according to the location information of the UE.

For example, the UE may obtain the location information of the UE by using a GNSS, or obtain the location information of the UE by using a cellular network or a WiFi network, and then report the location information to the macro base station by using the low frequency link.

FIG. 11 is a schematic block diagram of a macro base station according to another embodiment of the present invention.

A macro base station 110 in FIG. 11 may be configured to implement the steps and the methods in the foregoing method embodiments. In the embodiment in FIG. 11, the macro base station 110 includes an antenna 1110, a transmitter 1120, a receiver 1130, a processor 1140, and a memory 1150. The processor 1140 controls an operation of the macro base station 110, and may be configured to process a signal. The memory 1150 may include a read-only memory and a random access memory, and provides an instruction and data for the processor 1140. The transmitter 1120 and the receiver 1130 may be coupled to the antenna 1110. The components of the macro base station 110 are coupled together by using a bus system 1160. In addition to a data bus, the bus system 1160 includes a power bus, a control bus, and a status signal bus. However, for clear description, various types of buses in the figure are marked as the bus system 1160. The macro base station 110 belongs to a heterogeneous network, and the heterogeneous network further includes micro base stations. The micro base stations operate in a millimeter-wave band, and the macro base station 110 operates in a frequency band whose frequency is lower than that of the millimeter-wave band.

Specifically, the memory 1150 may store an instruction for executing the following processes:

determining location information of user equipment UE within coverage of the macro base station; allocating a candidate micro base station to the UE according to the location information of the UE, and sending identifier information of the candidate micro base station to the UE, where the identifier information of the candidate micro base station is used by the UE to receive a reference signal sent by the candidate micro base station; and sending the location information of the UE to the candidate micro base station, where the location information is used by the candidate micro base station to determine a first precoding matrix that is used when the candidate micro base station sends the reference signal to the UE.

Based on the foregoing technical solution, in this embodiment of the present invention, a micro base station transmits a precoded reference signal to UE in a millimeter-wave band, where a precoding matrix used for the reference signal is determined by the micro base station according to location information of the UE; because beams corresponding to precoded reference signals are more concentrated, even if there is an obstruction between the micro base station and the UE, the UE can still receive the reference signal, and then can measure a state of a millimeter-wave band channel based on the reference signal.

Further, the micro base station may precode a service signal based on the state of the millimeter-wave band channel, that is, based on a second precoding matrix, and then transmit a precoded service signal to the UE, instead of directly transmitting a signal based on a location of the UE. According to this embodiment of the present invention, the channel state of the millimeter-wave band channel between the micro base station and the UE can be measured. In this way, effectiveness of millimeter-wave communication is ensured, and efficiency of millimeter-wave communication performed by the micro base station is improved.

In addition, under the premise that the state of the millimeter-wave channel between the micro base station and the UE is accurately learned, a case in which the UE is forced to switch to a low frequency link to receive a service as a result of a millimeter-wave communication failure caused by asymmetry between a low frequency channel and a millimeter-wave channel can be prevented. In this way, a proportion of traffic offloaded by the micro base station from a macro base station can be increased, which further improves communication efficiency of a heterogeneous network.

It should be understood that the macro base station may allocate one or more candidate micro base stations to the UE. In a case that the macro base station allocates one candidate micro base station to the UE, the UE only needs to receive, in the millimeter-wave band, a reference signal transmitted by the candidate micro base station, and determine, according to the reference signal, a measurement report indicating the state of the millimeter-wave channel.

In a case that the macro base station allocates multiple candidate micro base stations to the UE, the UE needs to separately receive reference signals from the multiple candidate micro base stations in the millimeter-wave band, and determine, according to the reference signals, a measurement report indicating the state of the millimeter-wave channel.

It should also be understood that the millimeter-wave band refers to a wave band whose unit of wavelength is millimeter, and is a broad concept. In a propagation process, the millimeter-wave band has features of a large transmission loss, few paths, LOS links as main links, and a poor capability of penetrating through an obstruction.

In addition to electromagnetic waves of 1 millimeter to 10 millimeters, other electromagnetic waves close to the wavelength range also belong to the millimeter-wave band defined in this embodiment of the present invention, for example, an electromagnetic wave whose wavelength is 0.99 millimeters. That is, all electromagnetic waves that have the foregoing features and whose units of wavelength are on a millimeter level shall fall within the protection scope of this embodiment of the present invention.

Optionally, in an embodiment, the memory 1150 may further store an instruction for executing the following processes:

when allocating the candidate micro base station to the UE according to the location information of the UE, selecting, by the macro base station according to the location information of the UE and location information of the micro base stations in the heterogeneous network, at least one of micro base stations that effectively cover the UE as the candidate micro base station of the UE.

It should be understood that the micro base stations that effectively cover the UE may be determined according to a threshold of a receiver of the UE. For example, if quality of a signal sent by a micro base station and received by the UE is greater than the threshold of the receiver, the micro base station is a micro base station that effectively covers the UE. Specifically, the quality of the signal received by the UE from the micro base station may be estimated according to information such as a loss of a path between the UE and the micro base station and transmit power of the micro base station.

For example, in a case that the macro base station pre-stores the location information of the micro base stations, the macro base station may determine coverage of each micro base station connected to the macro base station. In this way, according to the location information of the UE and the location information of the micro base stations, the macro base station may allocate a micro base station that covers the UE to the UE as the candidate micro base station of the UE, and in this case, the UE is potential served UE of the candidate micro base station. Specifically, when deploying the heterogeneous network, an operator may store information such as precise locations and antenna array directions of the micro base stations in the corresponding macro base station.

In a case that micro base stations are densely deployed, each UE may have multiple candidate micro base stations. In addition, when allocating a candidate micro base station to the UE, the macro base station may also refer to the information such as the antenna directions of the micro base stations. In this way, a candidate micro base station can be allocated to each UE in a more proper way. It should be understood that this also falls within the protection scope of this embodiment of the present invention.

In addition, when determining potential served UE for a micro base station, the macro base station may ensure that a quantity of potential served UEs of each micro base station is far less than a quantity of antennas configured in the micro base station. For example, in a case that 100 antennas are configured in each micro base station, the macro base station determines no more than 10 UEs for each micro base station as potential served UEs of the micro base station according to distances between UEs and the micro base station. In this way, efficiency of millimeter-wave communication can be further improved.

Optionally, in another embodiment, the memory 1150 may further store an instruction for executing the following processes:

receiving a measurement report from the UE, where the measurement report is determined by the UE according to the reference signal received from the candidate micro base station, the measurement report includes channel information, and the channel information is used to indicate a state of a millimeter-wave band channel between the candidate micro base station and the UE; and selecting, from the candidate micro base station according to the measurement report, a micro base station that provides an access service for the UE.

For example, the macro base station configures a serving base station for the UE according to the measurement report reported by the UE. Specifically, a candidate micro base station that has a good channel state (for example, a candidate micro base station that meets a preset channel state condition) may be preferentially configured as a serving base station of the UE, and in a case that the channel state of the micro base station does not meet the preset condition, the macro base station is configured as a serving base station of the UE.

According to the foregoing method, after accurately learning the channel state of the millimeter-wave channel between the UE and the micro base station, the macro base station selects a suitable base station from all candidate micro base stations according to the measurement report sent by the UE, to provide an access service for the UE. In this way, a proportion of traffic offloaded by the micro base station from the macro base station can be increased, which further improves communication efficiency of the heterogeneous network.

Optionally, in another embodiment, the memory 1150 may further store an instruction for executing the following processes:

the measurement report further includes identifier information of a second precoding matrix, and sending the identifier information of the second precoding matrix to the selected micro base station, to instruct the micro base station to precode, according to the second precoding matrix, a service signal sent to the UE.

Optionally, in another embodiment, the memory 1150 may further store an instruction for executing the following processes:

when selecting, from the candidate micro base station and the macro base station according to the measurement report, a base station that provides an access service for the UE, selecting, from the candidate micro base station according to the measurement report, a candidate micro base station that meets a preset channel state condition, to provide an access service for the UE; or selecting, from the candidate micro base station according to the measurement report, a candidate micro base station that meets a preset channel state condition, to provide an access service for the UE.

For example, when there are multiple candidate micro base stations that meet the preset channel state condition according to the measurement report reported by the UE, one or more candidate micro base stations that have the best channel states may be selected from the multiple candidate micro base stations that meet the condition, to provide an access service for the UE. In this case, if multiple candidate micro base stations are used as serving base stations, when transmitting data to the UE, the candidate micro base stations use respective precoding matrices to encode a same data signal.

Alternatively, if the measurement report does not include identifier information of a micro base station that meets the preset channel state condition, in this case, the macro base station may provide an access service for the UE by using the low frequency link.

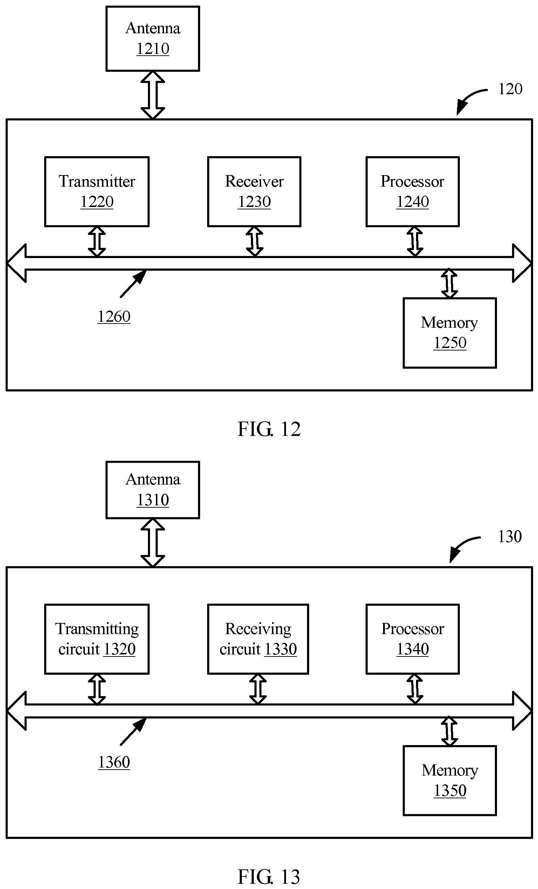

FIG. 12 is a schematic block diagram of a micro base station according to another embodiment of the present invention.

A micro base station 120 in FIG. 12 may be configured to implement the steps and the methods in the foregoing method embodiments. In the embodiment in FIG. 12, the micro base station 120 includes an antenna 1210, a transmitter 1220, a receiver 1230, a processor 1240, and a memory 1250. The processor 1240 controls an operation of the communications device 120, and may be configured to process a signal. The memory 1250 may include a read-only memory and a random access memory, and provides an instruction and data for the processor 1240. The transmitter 1220 and the receiver 1230 may be coupled to the antenna 1210. The components of the micro base station 120 are coupled together by using a bus system 1260. In addition to a data bus, the bus system 1260 includes a power bus, a control bus, and a status signal bus. However, for clear description, various types of buses in the figure are marked as the bus system 1260. The micro base station 120 belongs to a heterogeneous network, and the heterogeneous network further includes a macro base station. The micro base station 120 operates in a millimeter-wave band, and the macro base station operates in a frequency band whose frequency is lower than that of the millimeter-wave band.

Specifically, the memory 1250 may store an instruction for executing the following processes:

receiving location information of UE from the macro base station, where the location information is used by the candidate micro base station to send a reference signal to the UE; determining, according to the location information, a first precoding matrix that is used when the micro base station sends the reference signal to the UE, and generating a precoded reference signal; and sending, based on a spatial division multiplexing access SDMA technology, the precoded reference signal to the UE in a millimeter-wave band corresponding to the micro base station.

Based on the foregoing technical solution, in this embodiment of the present invention, a micro base station transmits a precoded reference signal to UE in a millimeter-wave band, where a precoding matrix used for the reference signal is determined by the micro base station according to location information of the UE; because beams corresponding to precoded reference signals are more concentrated, even if there is an obstruction between the micro base station and the UE, the UE can still receive the reference signal, and then can measure a state of a millimeter-wave band channel based on the reference signal.

Further, the micro base station may precode a service signal based on the state of the millimeter-wave band channel, that is, based on a second precoding matrix, and then transmit a precoded service signal to the UE, instead of directly transmitting a signal based on a location of the UE. According to this embodiment of the present invention, the channel state of the millimeter-wave band channel between the micro base station and the UE can be measured. In this way, effectiveness of millimeter-wave communication is ensured, and efficiency of millimeter-wave communication performed by the micro base station is improved.

In addition, under the premise that the state of the millimeter-wave channel between the micro base station and the UE is accurately learned, a case in which the UE is forced to switch to a low frequency link to receive a service as a result of a millimeter-wave communication failure caused by asymmetry between a low frequency channel and a millimeter-wave channel can be prevented. In this way, a proportion of traffic offloaded by the micro base station from a macro base station can be increased, which further improves communication efficiency of a heterogeneous network.

Further, the micro base station respectively transmits reference signals to potential served UEs by using an SDMA technology, which can save time-frequency resources needed for transmitting the reference signals and avoid a need to occupy different time-frequency resources. In addition, when sending the reference signal to the UE in the millimeter-wave band according to the location information of the UE, the micro base station may generate a corresponding precoding matrix according to the location information of the UE, and precode the reference signal by using the precoding matrix, to enhance directivity of the reference signal and improve channel measurement efficiency.

It should be understood that the millimeter-wave band refers to a wave band whose unit of wavelength is millimeter, and is a broad concept. In a propagation process, the millimeter-wave band has features of a large transmission loss, few paths, LOS links as main links, and a poor capability of penetrating through an obstruction. In addition to electromagnetic waves of 1 millimeter to 10 millimeters, other electromagnetic waves close to the wavelength range also belong to the millimeter-wave band defined in this embodiment of the present invention, for example, an electromagnetic wave whose wavelength is 0.99 millimeters. That is, all electromagnetic waves that have the foregoing features and whose units of wavelength are on a millimeter level shall fall within the protection scope of this embodiment of the present invention.

Optionally, in an embodiment, the memory 1250 may further store an instruction for executing the following processes:

when determining, according to the location information, the first precoding matrix that is used when the micro base station sends the reference signal to the UE, and generating the precoded reference signal, determining, according to the location information of the UE, (2L+1) first precoding matrices that are used when the micro base station sends reference signals to the UE, and correspondingly generating (2L+1) precoded reference signals, where L is a nonnegative integer.

For example, for convenient description, it is assumed that an original reference signal of a micro base station $i$ is $s_i$, and a potential served UE corresponding to the micro base station $i$ is represented by $UE_j$, where $j$ = 0, 1, ...., $K$ -1, and $K$ is a quantity of UEs within coverage of the macro base station. $N$ antennas are configured in each micro base station, and an inter-antenna distance is $d$. In this case, an $l$th precoding matrix $\mathbf{p}_{ij}^{(l)}$ that is used when the micro base station $i$ transmits a reference signal to $UE_j$ may be determined according to formula (11):

$$\mathbf{p}_{ij}^{(l)} = \frac{1}{\sqrt{N}} \left[ 1 \; e^{j2\pi \frac{d\sin\theta_{ij}^{(l)}}{\lambda}} \; e^{j2\pi \frac{2d\sin\theta_{ij}^{(l)}}{\lambda}} \; \mathrm{L} \; e^{j2\pi \frac{(N-1)d\sin\theta_{ij}^{(l)}}{\lambda}} \right]^T \qquad (11)$$

where $\lambda$ represents a wavelength of a millimeter wave, $\theta_{ij}^{(l)} = \theta_{ij} + l\Delta\theta$, and $-L \leq l \leq L$. $L$ is a value determined comprehensively according to multiple factors such as a positioning precision requirement and a quantity of time-frequency resources. $\theta_{ij}$ is an angle of arrival of the UE relative to the micro base station. FIG. 4 is a schematic diagram of a location of UE relative to a micro base station according to an embodiment of the present invention. As shown in FIG. 4, $N$ antennas are configured in the micro base station, and an inter-antenna distance is $d$. The location of the UE relative to the micro base station may be represented by an angle of arrival $\theta_{ij}$ of the UE relative to one antenna among multiple antennas configured in the micro base station and a distance between the UE and the antenna. It should be noted that the angle of arrival is related to a direction of a beam, and the distance is related to transmit energy of the beam. Because impact of the transmit energy on performance is far less than impact of the direction on performance, same transmit power is used in this embodiment. $\Delta\theta$ in the foregoing formula is a preset value, and may be specifically determined with full consideration of factors such as positioning precision, antenna array directivity, a UE quantity, and a quantity of resources used to transmit reference signals. For example, $\Delta\theta$ herein may be 1°.

When the reference signals are precoded by using the (2L+1) precoding matrices determined according to the foregoing method, to perform beamforming transmission, (2L+1) beams whose difference in transmission angles is $\Delta\theta$ can be generated. The first precoded reference signal transmitted by the micro base station $i$ to $UE_j$ may be written as $p_{ij}^{(1)}s_i$.

(2L+1) reference signals are generated according to the foregoing method, which can lower a precision requirement on the location information of the UE. The micro base station transmits beams that have different transmission angles and that bear the reference signals generated in the foregoing step, and in this way, beams whose center is a location of the UE and that cover a certain angle range can be formed. Therefore, a probability of system performance degrading caused by low positioning precision can be reduced.

Specifically, UE positioning precision in an existing positioning technology cannot satisfy a precision requirement needed when a signal is transmitted in a millimeter-wave band. Therefore, if positioning information is determined directly based on the positioning technology, and data is transmitted in the millimeter-wave band by using a precoding matrix that is determined according to a location of the UE relative to the micro base station, system performance may deteriorate rapidly. However, according to the method in this embodiment of the present invention, a problem of a high precision requirement on a UE location caused when beamforming transmission to UE is performed simply according to location information of the UE can be avoided.

Optionally, in an embodiment, the memory 1250 may further store an instruction for executing the following processes:

when sending, based on the spatial division multiplexing access SDMA technology, the precoded reference signal to the UE in the millimeter-wave band corresponding to the micro base station, sending, based on the SDMA technology, the (2L+1) precoded reference signals to the UE in the millimeter-wave band corresponding to the micro base station, where the (2L+1) precoded reference signals form (2L+1) beams whose center is a location of the UE and that cover a preset angle range.

For example, FIG. 5 is a schematic diagram of a micro base station transmitting a reference signal according to an embodiment of the present invention. As shown in FIG. 5, time-frequency resources used by the micro base station to transmit different precoded reference signals to UE 1 are orthogonal to each other in both a time domain and a frequency domain. The micro base station transmits reference signals to UE 1 and UE 2 by using a spatial multiplexing technology. In this way, reference signals can be transmitted to different UEs by using a same time-frequency resource. When the micro base station transmits multiple reference signal beams to each UE, each reference signal beam occupies a different time-frequency resource. In addition, multiple beams transmitted to same UE are centered around the UE, and cover a certain angle range.

Different micro base stations use orthogonal time-frequency resources to transmit reference signals, so as to avoid mutual interference between different micro base stations. Generally, time-frequency resources used by different micro base stations are orthogonal to each other in a time domain or a frequency domain or both the time domain and the frequency domain. Specifically, the macro base station may pre-allocate a time-frequency resource to each micro base station.

It is assumed that $M_{max}$ represents a maximum quantity of micro base stations within coverage of the macro base station, and $i$ represents a reference sign of the micro base station, where $i \leq M_{max}$. $N_{max}$ represents a quantity of orthogonal frequency resources (a quantity of subcarriers) of a high frequency link. Because bandwidth of the high frequency link is extremely large, it can be assumed that $M_{max} \leq N_{max}$ certainly holds. When the micro base station $i$ occupies (2L+1) orthogonal time-frequency resources in total to transmit reference signals, a location corresponding to an $l^{th}$ time-frequency resource may be determined according to formula (12), where $f(l)$ represents a location in the frequency domain, and $t(l)$ represents a location in time:

$$\begin{cases} f(l) = (i + l + L) \bmod N_{max} \\ t(l) = (l + L) \bmod \lceil (2L+1)M_{max} / N_{max} \rceil \end{cases} \quad (12)$$

where $M_{max}$ and $N_{max}$ are preset during heterogeneous network designing, and are known to the macro base station and the UE. It should be understood that formula (12) is merely an example, and the protection scope of this embodiment of the present invention is not limited thereto.

Optionally, in an embodiment, the memory 1250 may further store an instruction for executing the following processes:

receiving identifier information, sent by the macro base station, of a second precoding matrix; and precoding, according to the second precoding matrix, a service signal that is sent to the UE by using the sending unit.

FIG. 13 is a schematic block diagram of UE according to another embodiment of the present invention.

UE 130 in FIG. 13 may be configured to implement the steps and the methods in the foregoing method embodiments. In the embodiment in FIG. 13, the UE 130 includes an antenna 1310, a transmitting circuit 1320, a receiving circuit 1330, a processor 1340, and a memory 1350. The processor 1340 controls an operation of the UE 130, and may be configured to process a signal. The memory 1350 may include a read-only memory and a random access memory, and provides an instruction and data for the processor 1340. The transmitting circuit 1320 and the receiving circuit 1330 may be coupled to the antenna 1310. The components of the UE 130 are coupled together by using a bus system 1360. In addition to a data bus, the bus system 1360 includes a power bus, a control bus, and a status signal bus. However, for clear description, various types of buses in the figure are marked as the bus system 1360. The UE 100 accesses a heterogeneous network to perform communication. The heterogeneous network includes a macro base station and micro base stations, where the micro base stations operate in a millimeter-wave band, and the macro base station operates in a frequency band whose frequency is lower than that of the millimeter-wave band.

Specifically, the memory 1350 may store an instruction for executing the following processes:

receiving identifier information of a candidate micro base station from the macro base station, where the identifier information of the candidate micro base station is used by the user equipment UE to receive a reference signal sent by the candidate micro base station; receiving, according to the identifier information of the candidate micro base station, a precoded reference signal sent by the candidate micro base station, where a first precoding matrix used for precoding the reference signal is determined according to location information of the UE; determining a measurement report according to the received reference signal, where the measurement report includes channel information, and the channel information is used to indicate a state of a millimeter-wave band channel between the candidate micro base station and the UE; and sending the measurement report to the macro base station.

Based on the foregoing technical solution, in this embodiment of the present invention, a micro base station transmits a precoded reference signal to UE in a millimeter-wave band, where a precoding matrix used for the reference signal is determined by the micro base station according to location information of the UE; because beams corresponding to precoded reference signals are more concentrated, even if there is an obstruction between the micro base station and the UE, the UE can still receive the reference signal, and then can measure a state of a millimeter-wave band channel based on the reference signal.

Further, the micro base station may precode a service signal based on the state of the millimeter-wave band channel, that is, based on a second precoding matrix, and then transmit a precoded service signal to the UE, instead of directly transmitting a signal based on a location of the UE. According to this embodiment of the present invention, the channel state of the millimeter-wave band channel between the micro base station and the UE can be measured. In this way, effectiveness of millimeter-wave communication is ensured, and efficiency of millimeter-wave communication performed by the micro base station is improved.

In addition, under the premise that the state of the millimeter-wave channel between the micro base station and the UE is accurately learned, a case in which the UE is forced to switch to a low frequency link to receive a service as a result of a millimeter-wave communication failure caused by asymmetry between a low frequency channel and a millimeter-wave channel can be prevented. In this way, a proportion of traffic offloaded by the micro base station from a macro base station can be increased, which further improves communication efficiency of a heterogeneous network.

It should be understood that the macro base station may allocate one or more candidate micro base stations to the UE. In a case that the macro base station allocates one candidate micro base station to the UE, the UE only needs to receive, in the millimeter-wave band, a reference signal transmitted by the candidate micro base station, and determine, according to the reference signal, a measurement report indicating the state of the millimeter-wave channel.

In a case that the macro base station allocates multiple candidate micro base stations to the UE, the UE needs to separately receive reference signals from the multiple candidate micro base stations in the millimeter-wave band, and determine, according to the reference signals, a measurement report indicating the state of the millimeter-wave channel. For example, in a case that the UE has multiple candidate micro base stations, the UE may directly report the measurement report to the micro base stations, and the micro base stations provide access services for the UE according to measurement results.

It should also be understood that the millimeter-wave band refers to a wave band whose unit of wavelength is millimeter, and is a broad concept. In a propagation process, the millimeter-wave band has features of a large transmission loss, few paths, LOS links as main links, and a poor capability of penetrating through an obstruction. In addition to electromagnetic waves of 1 millimeter to 10 millimeters, other electromagnetic waves close to the wavelength range also belong to the millimeter-wave band defined in this embodiment of the present invention, for example, an electromagnetic wave whose wavelength is 0.99 millimeters. That is, all electromagnetic waves that have the foregoing features and whose units of wavelength are on a millimeter level shall fall within the protection scope of this embodiment of the present invention.

Optionally, in an embodiment, the memory 1350 may further store an instruction for executing the following processes:

the measurement report includes identifier information of a candidate micro base station that meets a preset channel state condition and identifier information of a precoding matrix.

For example, the measurement report generated by the UE herein may include a micro base station whose receive energy is the greatest and a serial number indication of a corresponding precoding matrix, or several micro base stations whose receive energy is the greatest and serial number indications of corresponding precoding matrices. When the UE does not obtain a channel estimation result that meets the condition, the UE may feed back a string of preset special characters in the measurement report. In this case, the macro base station may provide an access service for the UE.

Optionally, in an embodiment, the memory 1350 may further store an instruction for executing the following processes:

the measurement report further includes identifier information of a second precoding matrix, and receiving a service signal sent by a micro base station that is selected by the macro base station according to the measurement report, where the service signal is a signal that is obtained after precoding is performed by using the second precoding matrix.

Optionally, in an embodiment, the memory 1350 may further store an instruction for executing the following processes:

sending the location information of the UE to the macro base station, so that the macro base station allocates the candidate micro base station to the UE according to the location information of the UE. For example, the UE may obtain the location information of the UE by using a GNSS, or obtain the location information of the UE by using a cellular network or a WiFi network, and then report the location information to the macro base station by using the low frequency link.

In this way, the macro base station no longer needs to measure a location of the UE, which reduces system overheads.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A macro base station, wherein the macro base station belongs to a heterogeneous network, the heterogeneous network further comprises micro base stations, the micro base stations operate in a millimeter-wave band, and the macro base station comprises:

a processing unit, configured to determine location information of user equipment UE within coverage of the macro base station, and allocate a candidate micro base station to the UE according to the location information of the UE; and

a sending unit, configured to send identifier information of the candidate micro base station to the UE, wherein the identifier information of the candidate micro base station is used by the UE to receive a reference signal sent by the candidate micro base station, wherein

the sending unit is further configured to send the location information of the UE to the candidate micro base station, wherein the location information is used by the candidate micro base station to determine a first precoding matrix that is used when the candidate micro base station sends the reference signal to the UE.

2. The macro base station according to claim 1, wherein the processing unit is specifically configured to select, according to the location information of the UE and location information of the micro base stations in the heterogeneous network, at least one of micro base stations that effectively cover the UE as the candidate micro base station of the UE.

3. The macro base station according to claim 1 or 2, wherein the macro base station further comprises a receiving unit, wherein

the receiving unit is configured to receive a measurement report from the UE, wherein the measurement report is determined by the UE according to the reference signal received from the candidate micro base station, the measurement report comprises channel information, and the channel information is used to indicate a state of a millimeter-wave band channel between the candidate micro base station and the UE; and

the processing unit is further configured to select, from the candidate micro base station according to the measurement report, a micro base station that provides an access service for the UE.

4. The macro base station according to claim 3, wherein the measurement report further comprises identifier information of a second precoding matrix; and

the sending unit is further configured to send the identifier information of the second precoding matrix to the selected micro base station, to instruct the micro base station to precode, according to the second precoding matrix, a service signal sent to the UE.

5. The macro base station according to claim 1 or 2, wherein the processing unit is specifically configured to select, from the candidate micro base station according to the measurement report, a candidate micro base station that meets a preset channel state condition, to provide an access service for the UE.

6. A micro base station, wherein the micro base station belongs to a heterogeneous network, the heterogeneous network further comprises a macro base station, the micro base station operates in a millimeter-wave band, and the micro base station comprises:

a receiving unit, configured to receive location information of UE from the macro base station, wherein the location information is used by the candidate micro base station to send a reference signal to the UE;

a processing unit, configured to determine, according to the location information, a first precoding matrix that is used when the micro base station sends the reference signal to the UE, and generate a precoded reference signal; and

a sending unit, configured to send the precoded reference signal to the UE in a millimeter-wave band corresponding to the micro base station.

7. The micro base station according to claim 6, wherein the processing unit is specifically configured to determine, according to the location information of the UE, (2L+1) first precoding matrices that are used when the micro base station sends reference signals to the UE, and correspondingly generate (2L+1) precoded reference signals, wherein L is a nonnegative integer.

8. The micro base station according to claim 7, wherein the sending unit is specifically configured to send, based on an SDMA technology, the (2L+1) precoded reference signals to the UE in the millimeter-wave band corresponding to the micro base station, wherein the (2L+1) precoded reference signals form (2L+1) beams whose center is a location of the UE and that cover a preset angle range.

9. The micro base station according to any one of claims 6 to 8, wherein
the receiving unit is further configured to receive identifier information, sent by the macro base station, of a second precoding matrix; and

the processing unit is further configured to precode, according to the second precoding matrix, a service signal that is sent to the UE by using the sending unit.

**10.** User equipment, comprising:

a receiving unit, configured to receive identifier information of a candidate micro base station from a macro base station, wherein the identifier information of the candidate micro base station is used by the user equipment UE to receive a reference signal sent by the candidate micro base station, wherein

the receiving unit is further configured to receive, according to the identifier information of the candidate micro base station, a precoded reference signal sent by the candidate micro base station, wherein a first precoding matrix used for precoding the reference signal is determined according to location information of the UE;

a processing unit, configured to determine a measurement report according to the received reference signal, wherein the measurement report comprises channel information, and the channel information is used to indicate a state of a millimeter-wave band channel between the candidate micro base station and the UE; and

a sending unit, configured to send the measurement report to the macro base station.

**11.** The user equipment according to claim 10, wherein the measurement report further comprises identifier information of a micro base station that meets a preset channel state condition.

**12.** The user equipment according to claim 10 or 11, wherein the measurement report further comprises identifier information of a second precoding matrix; and

the receiving unit is further configured to receive a service signal sent by a micro base station that is selected by the macro base station according to the measurement report, wherein the service signal is a signal that is obtained after precoding is performed by using the second precoding matrix.

**13.** The user equipment according to any one of claims 10 to 12, wherein the sending unit is further configured to send the location information of the UE to the macro base station.

**14.** A method for communication in a heterogeneous network, wherein the heterogeneous network comprises a macro base station and micro base stations, the micro base stations operate in a millimeter-wave band, and the method comprises:

determining, by the macro base station, location information of user equipment UE within coverage of the macro base station;

allocating, by the macro base station, a candidate micro base station to the UE according to the location information of the UE, and sending identifier information of the candidate micro base station to the UE, wherein the identifier information of the candidate micro base station is used by the UE to receive a reference signal sent by the candidate micro base station; and

sending, by the macro base station, the location information of the UE to the candidate micro base station, wherein the location information is used by the candidate micro base station to determine a first precoding matrix that is used when the candidate micro base station sends the reference signal to the UE.

**15.** The communication method according to claim 14, wherein the allocating, by the macro base station, a candidate micro base station to the UE according to the location information of the UE comprises:

selecting, by the macro base station according to the location information of the UE and location information of the micro base stations in the heterogeneous network, at least one of micro base stations that effectively cover the UE as the candidate micro base station of the UE.

**16.** The communication method according to claim 14 or 15, wherein the method further comprises:

receiving, by the macro base station, a measurement report from the UE, wherein the measurement report is determined by the UE according to the reference signal received from the candidate micro base station, the measurement report comprises channel information, and the channel information is used to indicate a state of a millimeter-wave band channel between the candidate micro base station and the UE; and

selecting, by the macro base station from the candidate micro base station according to the measurement report, a micro base station that provides an access service for the UE.

**17.** The communication method according to claim 16, wherein the measurement report further comprises identifier information of a second precoding matrix; and the method further comprises:

sending, by the macro base station, the identifier information of the second precoding matrix to the selected micro base station, to instruct the micro base station to precode, according to the second precoding matrix, a service signal sent to the UE.

**18.** The communication method according to claim 14 or 15, wherein the selecting, by the macro base station from the candidate micro base station according to the measurement report, a micro base station that provides an access service for the UE comprises:

selecting, from the candidate micro base station according to the measurement report, a candidate micro base station that meets a preset channel state condition, to provide an access service for the UE.

**19.** A method for communication in a heterogeneous network, wherein the heterogeneous network comprises a macro base station and micro base stations, the micro base stations operate in a millimeter-wave band, and the method comprises:

receiving, by the micro base station, location information of UE from the macro base station, wherein the location information is used by the candidate micro base station to send a reference signal to the UE;
determining, by the micro base station according to the location information, a first precoding matrix that is used when the micro base station sends the reference signal to the UE, and generating a precoded reference signal; and
sending, by the micro base station, the precoded reference signal to the UE in a millimeter-wave band corresponding to the micro base station.

**20.** The communication method according to claim 19, wherein the determining, by the micro base station according to the location information, a first precoding matrix that is used when the micro base station sends the reference signal to the UE, and generating a precoded reference signal comprises:

determining, by the micro base station according to the location information of the UE, $(2L+1)$ first precoding matrices that are used when the micro base station sends reference signals to the UE, and correspondingly generating $(2L+1)$ precoded reference signals, wherein L is a nonnegative integer.

**21.** The communication method according to claim 20, wherein the sending, by the micro base station, the precoded reference signal to the UE in a millimeter-wave band corresponding to the micro base station comprises:

sending, by the micro base station based on an SDMA technology, the $(2L+1)$ precoded reference signals to the UE in the millimeter-wave band corresponding to the micro base station, wherein the $(2L+1)$ precoded reference signals form $(2L+1)$ beams whose center is a location of the UE and that cover a preset angle range.

**22.** The communication method according to any one of claims 19 to 21, wherein the method further comprises:

receiving, by the micro base station, identifier information, sent by the macro base station, of a second precoding matrix; and
precoding, by the micro base station according to the second precoding matrix, a service signal that is sent to the UE by using the sending unit.

**23.** A method for communication in a heterogeneous network, wherein the heterogeneous network comprises a macro base station and micro base stations, the micro base stations operate in a millimeter-wave band, and the method comprises:

receiving, by user equipment UE, identifier information of a candidate micro base station from the macro base station, wherein the identifier information of the candidate micro base station is used by the user equipment UE to receive a reference signal sent by the candidate micro base station;
receiving, by the UE according to the identifier information of the candidate micro base station, a precoded reference signal sent by the candidate micro base station, wherein a first precoding matrix used for precoding the reference signal is determined according to location information of the UE;

determining, by the UE, a measurement report according to the received reference signal, wherein the measurement report comprises channel information, and the channel information is used to indicate a state of a millimeter-wave band channel between the candidate micro base station and the UE; and

sending, by the UE, the measurement report to the macro base station.

24. The communication method according to claim 23, wherein the measurement report further comprises identifier information of a micro base station that meets a preset channel state condition.

25. The communication method according to claim 23 or 24, wherein the measurement report further comprises identifier information of a second precoding matrix; and

receiving, by the UE, a service signal sent by a micro base station that is selected by the macro base station according to the measurement report, wherein the service signal is a signal that is obtained after precoding is performed by using the second precoding matrix.

26. The communication method according to any one of claims 23 to 25, wherein the method further comprises:

sending, by the UE, the location information of the UE to the macro base station, so that the macro base station allocates the candidate micro base station to the UE according to the location information of the UE.

27. A heterogeneous network communications system, wherein the heterogeneous network communications system comprises the macro base station according to any one of claims 1 to 5 and the micro base station according to any one of claims 6 to 9.

Low frequency link ▶    High frequency link ▶

FIG. 1

20

| A macro base station determines location information of user equipment UE within coverage of the macro base station | 201 |

The macro base station allocates a candidate micro base station to the UE according to the location information of the UE, and sends identifier information of the candidate micro base station to the UE, where the identifier information of the candidate micro base station is used by the UE to receive a reference signal sent by the candidate micro base station — 202

The macro base station sends the location information of the UE to the candidate micro base station, where the location information is used by the candidate micro base station to determine a first precoding matrix that is used when the candidate micro base station sends the reference signal to the UE — 203

FIG. 2

30

| A micro base station receives location information of UE from a macro base station, where the location information is used by the candidate micro base station to send a reference signal to the UE | 301 |

| The micro base station determines, according to the location information, a first precoding matrix that is used when the micro base station sends the reference signal to the UE, and generates a precoded reference signal | 302 |

| The micro base station sends, based on a spatial multiplexing access SDMA technology, the precoded reference signal to the UE in a millimeter-wave band corresponding to the micro base station | 303 |

FIG. 3

UE

$\theta_{ij}$

Antenna

... 

$d$

FIG. 4

Micro base
station

Frequency

Time

UE 1

UE 2

FIG. 5

60

| User equipment UE receives identifier information of a candidate micro base station from a macro base station, where the identifier information of the candidate micro base station is used by the user equipment UE to receive a reference signal sent by the candidate micro base station | 601 |

| The UE receives, according to the identifier information of the candidate micro base station, a precoded reference signal sent by the candidate micro base station, where a first precoding matrix used for precoding the reference signal is determined according to location information of the UE | 602 |

| The UE determines a measurement report according to the received reference signal, where the measurement report includes channel information, and the channel information is used to indicate a state of a millimeter-wave band channel between the candidate micro base station and the UE | 603 |

| The UE sends the measurement report to the macro base station | 604 |

FIG. 6

FIG. 7

Macro base station 80

Processing unit 801

Sending unit 802

Receiving unit 803

FIG. 8

Micro base station 90

Receiving unit 901

Processing unit 902

Sending unit 903

FIG. 9

UE 100

Receiving unit 1010

Processing unit 1020

Sending unit 1030

FIG. 10

Antenna
1110

110

Transmitter
1120

Receiver
1130

Processor
1140

1160

Memory
1150

FIG. 11

Antenna
1210

120

Transmitter
1220

Receiver
1230

Processor
1240

1260

Memory
1250

FIG. 12

Antenna
1310

130

Transmitting
circuit 1320

Receiving
circuit 1330

Processor
1340

1360

Memory
1350

FIG. 13

# INTERNATIONAL SEARCH REPORT

| International application No. |
|---|
| PCT/CN2014/079044 |

## A. CLASSIFICATION OF SUBJECT MATTER

H04W 36/00 (2009.01) i; H04W 24/02 (2009.01) i

According to International Patent Classification (IPC) or to both national classification and IPC

## B. FIELDS SEARCHED

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNABS, CNTXT, CNKI: macro base station, macro cell, micro base station, micro cell, micro-micro cell, femto, home base station, closed user group, user equipment, UE, position information, reference signal, measurement report, precoding, signal, millimeter wave band; VEN: macro, micro, pico, femto, cell, NodeB, FBS, LPN, CSG, location, identification, measure, conference, signal, channel, UE

## C. DOCUMENTS CONSIDERED TO BE RELEVANT

| Category* | Citation of document, with indication, where appropriate, of the relevant passages | Relevant to claim No. |
|---|---|---|
| X | CN 103428727 A (ZTE CORPORATION) 04 December 2013 (04.12.2013) description, paragraphs [0045]-[0057], and figures 1-5 | 1, 2, 6-9, 14, 15, 19-22, 27 |
| Y | CN 103428727 A (ZTE CORPORATION) 04 December 2013 (04.12.2013) description, paragraphs [0045]-[0057], and figures 1-5 | 3-5, 10-13, 16-18, 23-26 |
| Y | CN 102938894 A (POTEVIO INSTITUTE TECHNOLOGY CO., LTD.) 20 February 2013 (20.02.2013) description, paragraphs [0042]-[0055], and figures 1-4 | 3-5, 10-13, 16-18, 23-26 |

☒ Further documents are listed in the continuation of Box C.    ☒ See patent family annex.

| *   Special categories of cited documents: | "T"   later document published after the international filing date or priority date and not in conflict with the application but cited to understand the principle or theory underlying the invention |
|---|---|
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&" document member of the same patent family |

| Date of the actual completion of the international search | Date of mailing of the international search report |
|---|---|
| 13 February 2015 | 27 February 2015 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>Yu, Hongrui<br><br>Telephone No. (86-10) 62411490 |

Form PCT/ISA /210 (second sheet) (July 2009)

| | INTERNATIONAL SEARCH REPORT | International application No. |
|---|---|---|
| | | PCT/CN2014/079044 |

C (Continuation).     DOCUMENTS CONSIDERED TO BE RELEVANT

| Category* | Citation of document, with indication, where appropriate, of the relevant passages | Relevant to claim No. |
|---|---|---|
| A | CN 101459985 A (HUAWEI TECHNOLOGIES CO., LTD.) 17 June 2009 (17.06.2009) the whole document | 1-27 |
| A | CN 102469557 A (HUAWEI TECHNOLOGIES CO., LTD.) 23 May 2012 (23.05.2012) the whole document | 1-27 |
| A | CN 102378205 A (HUAWEI TECHNOLOGIES CO., LTD.) 14 March 2012 (14.03.2012) the whole document | 1-27 |

Form PCT/ISA /210 (continuation of second sheet) (July 2009)

**INTERNATIONAL SEARCH REPORT**
Information on patent family members

| | International application No. |
|---|---|
| | PCT/CN2014/079044 |

| Patent Documents referred in the Report | Publication Date | Patent Family | Publication Date |
|---|---|---|---|
| CN 103428727 A | 04 December 2013 | None | |
| CN 102938894 A | 20 February 2013 | None | |
| CN 101459985 A | 17 June 2009 | WO 2009076892 A1 | 25 June 2009 |
| | | US 8219096 B2 | 10 July 2012 |
| | | US 2010261476 A1 | 14 October 2010 |
| | | CN 101459985 B | 08 December 2010 |
| CN 102469557 A | 23 May 2012 | WO 2011137784 A1 | 10 November 2011 |
| | | US 2014004863 A1 | 02 January 2014 |
| | | CN 102469557 B | 13 August 2014 |
| CN 102378205 A | 14 March 2012 | US 2013109400 A1 | 02 May 2013 |
| | | US 8750890 B2 | 10 June 2014 |
| | | WO 2011150763 A1 | 08 December 2011 |

Form PCT/ISA /210 (patent family annex) (July 2009)